(19) Europäisches Patentamt
European Patent Office
Office européen des brevets

(11) **EP 3 812 974 A1**

(12) **EUROPEAN PATENT APPLICATION**

(43) Date of publication:
**28.04.2021 Bulletin 2021/17**

(51) Int Cl.:
**G06N 20/10** (2019.01)      **G06N 3/04** (2006.01)
**G06N 3/08** (2006.01)

(21) Application number: **19205447.6**

(22) Date of filing: **25.10.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Onfido Ltd**
**London, Greater London EC2M 2PA (GB)**

(72) Inventors:
- **CHRISTIANSEN, Lewis Carl**
  **London, EC2M 2PA (GB)**
- **SHI, Zhiyuan**
  **London, EC2M 2PA (GB)**
- **SABATHÉ, Romain Raymond Jackie**
  **London, EC2M 2PA (GB)**
- **BOTROS, Philip Samuël**
  **London, EC2M 2PA (GB)**

- **GIETEMA, Jochem**
  **London, EC2M 2PA (GB)**
- **REYNAERT, Pieter-Jan Louis Christianne**
  **London, EC2M 2PA (GB)**
- **DERMAUX, Sophie**
  **London, EC2M 2PA (GB)**
- **DABKOWSKA, Karolina**
  **London, EC2M 2PA (GB)**
- **PIZZOCCHERO, Daniele**
  **London, EC2M 2PA (GB)**
- **MORTAZAVIAN, Pouria**
  **London, EC2M 2PA (GB)**
- **MAHADEVAN, Mohan**
  **London, EC2M 2PA (GB)**

(74) Representative: **Korenberg, Alexander Tal**
**Kilburn & Strode LLP**
**Lacon London**
**84 Theobalds Road**
**London WC1X 8NL (GB)**

(54) **MACHINE LEARNING INFERENCE SYSTEM**

(57) The present invention relates to a machine learning inference system and processing modules thereof. In particular, the present invention relates to a machine learning inference system, a confidence module, a data minder module, a data remapping module, an adversarial defence module, and an update module. The machine learning inference system and processing modules thereof are useful for mission-critical applications to increase and maintain performance of a machine learning model.

FIG. 7

## Description

## Technical Field

The present invention relates to a machine learning inference system and processing modules thereof. In particular, the present invention relates to a machine learning inference system, a confidence module for a machine learning inference system, a data minder module for a machine learning inference system, a data remapping module for a machine learning inference system, an adversarial defence module for a machine learning inference system, and an update module for a machine learning inference system.

## Background

In recent years, the use of machine learning models has dramatically increased and this had led to increased performance of a wide range of applications. The performance achieved by machine learning models is now able to surpass human performance, enabling a high levels of automation for existing applications and opening up new applications to the use of machine learning models.

In order to deploy a machine learning model for a particular application, there are three standard steps that are undertaken. The first of these steps is to define the application-specific decision that the machine learning model is intended to resolve and to acquire suitable training data. The second step is to build, train and validate the machine learning model. The final step is to deploy and maintain the machine learning model in the wild so that sample data can be processed by the machine learning model to produce decisions that are utilised by the particular application. Notably, a machine learning model is considered "in the wild" after being passed through a controlled development environment and being released into production, typically for interaction with the public.

Whilst the performance of machine learning models are stable in controlled development environments, performance of machine learning models deployed in the wild, where the sample data may not be representative of the training data used to train the machine learning model, can be much lower. Therefore, machine learning models deployed in the wild typically have auxiliary systems to maintain their performance. Such auxiliary systems can be referred to as 'machine learning inference systems'.

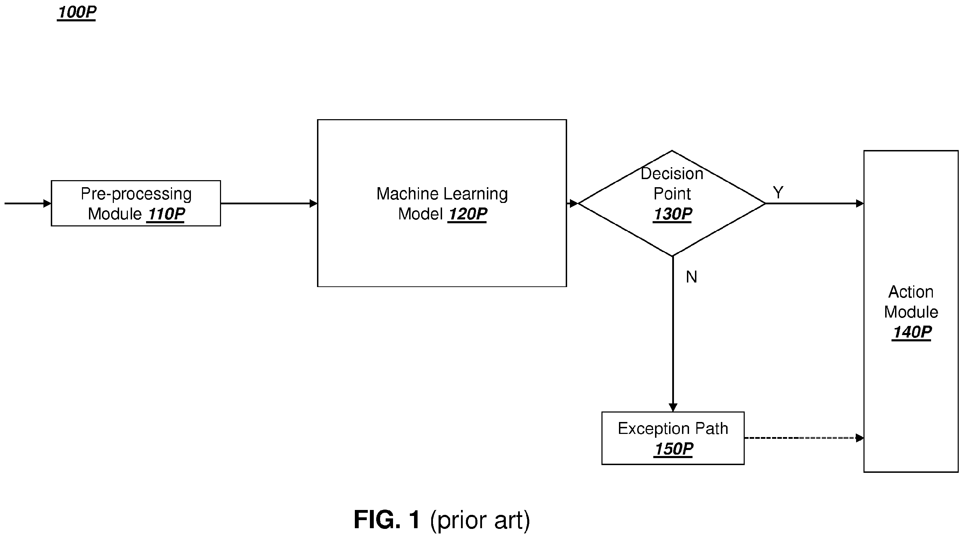

An example of a known machine learning inference system 100P is shown in Fig. 1. Machine learning inference system 100P comprises a machine learning model 120P which has been trained for a particular application using training data. During deployment of the machine learning module 120P, sample data is received by pre-processing module 110P which is configured to perform initial manipulation of the sample data before processing by the machine learning model 120P. For example, if the sample data is an image containing an official document, then the pre-processing module 110P may perform image transformations to rotate and crop the image such that the image contains only the official document, thereby matching training data which is made up of machines that contain only the official document. From the pre-processing module 110P, sample data is sent to machine learning model 120P where it is processed to produce an output. For instance, in the example mentioned, the machine learning model 120P may determine if an official document is authentic or not. The output is then sent to decision point 130P which determines whether to accept the output. If the output is accepted, the output is sent to be actioned by the application by action module 140P. Otherwise, the output is sent to exception path 150P, where a human operator manually reviews the output and associated sample data to determine what the correct outcome is. The corrected output is then sent to be actioned by action module 140P. Human intervention of this kind is typically referred to as human-in-the-loop.

Known machine learning inference system 100P of Fig. 1 is suited to mission-non-critical applications. Mission-non-critical applications include recommender systems such as Netflix, Google image search, etc., where subpar performance does not have serious consequences. At the most, subpar performance can lead to a poor experience for a user, but there are no significant consequences for missuggestions. Accordingly, mission-non-critical applications can and often tolerate and operate with low levels of performance and high performance fluctuation. For mission-critical applications, however, the performance of the machine learning model is paramount. This is because subpar performance for mission-critical applications, which include applications relating to identify verification, medical applications, control of electrical grids, nuclear power plants, production line controls, air traffic controls, etc., can have significant and immediate consequences. Mission-critical applications are typically expected to operate at a performance level between 1 error in 1000 (i.e. 99.9%) to 1 error in a million (99.9999%). Since know machine learning inference system 100P cannot provide this performance level, nor sufficient performance consistency, known machine learning inference system 100P is not suitable to maintain the machine learning model in the wild for mission-critical applications.

## Summary

The inventors have identified several problems with known machine learning inference system 100P which cause subpar performance in the wild. These problems include 1) the use of the Softmax operator as a confidence measure, 2) the similarity of sample data to training data, 3) the lack of defences against adversarial attacks, 4) machine learning model updates being instigated manually, amongst others. Each of these problems is discussed in further detail below.

For machine learning models based on a neural network, known machine learning inference systems typically employ the Softmax operator at decision point 130P. The Softmax operator $S(y_i)$ is defined as:

$$S(y_i) = e^{y_i} / \sum_j e^{y_j} \qquad \text{[Eq. 1]}$$

where $y_i$ represents the non-normalized output of the neural network for class $i$, and the index $j$ runs over all classes. The output of the Softmax operator is a set of normalised outputs (i.e. outputs having a value between 0 and 1) which add up to 1. For this reason, the output of the Softmax operator is often mistakenly interpreted as a probability. Applied to the output of a neural network, the Softmax operator output is therefore often wrongly considered to be a probability distribution over predicted output classes. Alternatively, the Softmax operator output is seen as a confidence measure, but this is also not a true representation of the Softmax operator output. At best, the Softmax operator should be considered a normalising function for the outputs of the neural network that strongly correlates with a confidence measure. For mission-critical applications, the problem is that this "strong correlation" is not sufficient to maintain the high and consistent performance levels required for the machine learning model, and applications using machine learning inference systems that rely on the Softmax operator as the decision criteria at decision point 130P can be prone to sudden failures that appear without warning. These sudden failures are particularly undesirable for mission-critical applications where failures can have significant consequences. Thus, an improved way to measure confidence is desired for mission-critical applications.

In a first aspect of the invention, there is provided a computer-implemented method for a confidence module of a machine learning inference system. The method comprises: receiving data pertaining to sample data, wherein the sample data is the data to be processed by the machine learning model; analysing the data pertaining to the sample data using a mathematical operation and/or a machine learning algorithm, wherein the machine learning algorithm is not a deep machine learning algorithm; determining a confidence score for the machine learning model based on the analysis; and, only if the confidence score is below a predetermined confidence threshold, triggering retraining of the machine learning model. In this way, the machine learning inference system is able to provide a confidence bound on the predictability of the machine learning model that can be used to maintain performance, and trigger retraining of the machine learning model should the confidence be lower than is acceptable. In this way, the reliance on the Softmax operator as a confidence measure is avoided, thus enabling high and consistent performance level for machine learning models in mission-critical applications.

The next problem identified relates to the similarity of sample data to training data, or more particularly, the lack thereof. When sample data that is received during deployment of a machine learning model is not sufficiently similar to the training data that was used to train the machine learning model, it is problematic because machine learning models do not generalise well. This causes subpar performance for the machine learning model, which can pass undetected by known machine learning inference systems and therefore do not trigger exception path 150P. Although generalisation can be improved during training through several known techniques, these techniques are not guaranteed to maintain the performance of the machine learning model for disparate sample data, which can and often is received in the wild. Therefore, it is desirable that machine learning inference systems for mission-critical applications overcome the lack of generalisation of machine learning models.

In a second aspect of the invention, there is provided a computer-implemented method for a data minder module of a machine learning inference system. The method comprises: receiving training data, wherein the training data is the data used to train a machine learning model; receiving sample data, wherein the sample data is the data to be processed by the machine learning model; comparing, using a data representation model, the sample data to the training data to determine a similarity score; only if the similarity score is above or equal to a first predetermined similarity threshold, sending the sample data to the machine learning model for processing. In this way, the machine learning inference system is able to evaluate sample data before the sample data is provided to the machine learning model for processing. The machine learning inference system may then restrict sample data which is not deemed suitable for being processed by the machine learning model. This means that the machine learning model is no longer expected to be able to generalise to process sample data that is not sufficiently similar to the training data. As a consequence, the number of inaccurate outputs of machine learning model is dramatically reduced.

In a third aspect of the invention, there is provided a computer-implemented method for a data remapping module of a machine learning inference system, The method comprises: receiving training data, wherein the training data is the data used to train a machine learning model; receiving sample data, wherein the sample data is the data to be processed by the machine learning model; performing domain adaptation on the sample data to increase the similarity between the sample data and the training data; sending the adapted sample data to the machine learning model for processing. In this way, the machine learning inference system is able to adapt sample data before the sample data is provided to the machine learning model for processing, in order to make the sample data more similar to the training data. This means that the machine learning model is no longer expected to be able to generalise to process sample data that is not sufficiently similar to the training data. As a consequence, the number of inaccurate outputs of machine learning model is dramatically reduced.

Adversarial attacks can also be problematic for machine learning models deployed in the wild. Adversarial attacks involve particular of distortions that trick machine learning models into making a false prediction. Adversarial examples in neural networks were first explored in Szegedy, C., Zaremba, W., Sutskever, I., Bruna, J., Erhan, D., Goodfellow, I. and Fergus, R., 2013. "Intriguing properties of neural networks", arXiv preprint arXiv:1312.6199, where it was shown that an image with adversarial distortion, i.e. added noise which is imperceptible to a human, causes the machine learning model to output a significantly different classification for the distorted image compared to the undistorted image. This puts the robustness of machine learning models into question, particularly for mission-critical applications, where an incorrect predictions are likely to have significant consequences. Moreover, adversarial attacks are becoming more prevalent, particularly for certain applications such as financial applications, where fraudsters are using increasingly sophisticated techniques to attack the machine learning model that are used to verify a user for access to a user account. Therefore, it is desirable to include defence against adversarial attacks in the machine learning inference system.

In a fourth aspect of the invention, there is provided a computer-implemented method for an adversarial defence module of a machine learning inference system. The method comprises: creating a reference activation signature for a machine learning model at a first point in time; creating a sample activation signature for a second version of the machine learning model at a second point in time, subsequent to the first point in time; comparing the sample activation signature to the reference activation signature to detect an anomaly in the sample activation signature; and if an anomaly is detected, sending the sample data to an exception path. This defends against adversarial attacks because such attacks leave signatures in the activation signature of a machine learning model. By identifying anomalies in the activation signature over time, adversarial attacks can be detected and sent to an exception path for review by a human operator. In this way, defence is provided in the machine learning inference system against adversarial attacks.

The second aspect of the invention can be used to defend against adversarial attacks. In particular, by evaluating sample data before the sample data is provided to the machine learning model for processing, sample data with imperceptible adversarial distortions may be detected. The machine learning inference system may then stop this sample data from being processed by the machine learning model. As a consequence, the chance of the adversarial attack propagating through the machine learning model and causing false outputs is reduced.

The third aspect of the invention can be used to defend against adversarial attacks. In particular, by performing domain adaptation on the sample data before the sample data is provided to the machine learning model for processing, the particular distortions which cause the adversarial attack may be removed from the sample data. This means that the machine learning model cannot be tricked into outputting a false output.

Most machine learning models when used in the wild are updated (i.e. retrained and redeployed) at some point during their deployment. Thus, rudimentary model updates form an integral part of known machine learning inference systems. However, such model updates tend to be performed as a result of human intervention and at a frequency determined by a person skilled in the art or as a consequence of a serious performance drop in the machine learning model. This is not sufficient for mission-critical applications as serious performance drops can have serious consequences. Thus, an improved way of performing machine learning model updates is desired.

In a fifth aspect of the invention, there is provided a computer-implemented method for an update module of a machine learning inference system. The method comprises: receiving first performance data relating to the performance of a machine learning model at a first point in time and storing the first performance data; receiving second performance data relating to the performance of the machine learning model at a second point in time, subsequent to the first point in time, and storing the second performance data; calculating a data drift for the machine learning model using the second performance data and the first performance data; only if the data drift is above a first predetermined drift threshold, triggering retraining of the machine learning model. In this way, the machine learning inference system is able to automatically retrain the machine learning model by identifying when changes in performance data and data drifts are above expected levels. This removes the need for human intervention to update the machine learning model, and also reduces serious performance drops by automatically identifying changes in performance.

In another aspect of the invention, there is provided a processing module configured to perform any one of the above-described methods. In further aspect of the invention, there is provided a computer-readable storage medium comprising executable instructions for performing any one of the above-described methods. In a yet further aspect of the invention there is a computer comprising a processor configured to execute executable code stored in memory, wherein the executable code comprises instructions for performing any one of the above-described methods.

Finally, as outlined in the background section, known machine learning inference systems, including known machine learning inference system 100 of Fig. 1, are not suitable for mission-critical applications. Therefore, a machine learning inference system which is suitable for mission-critical applications is desired.

In a sixth aspect of the invention, there is provided a machine learning inference system. The machine learning inference system comprises: a machine learning model configured to receive sample data, process the sample data, and produce an output; and a confidence module communicatively coupled to the machine learning module and configured to: receive data pertaining to the sample data; analyse the data pertaining to the sample data using a mathematical operation and/or a machine learning algorithm, wherein the machine learning algorithm is not a deep machine learning algorithm; determine a confidence score for the machine learning model based on the analysis; and only if the confidence score is below a predetermined confidence threshold, triggering retraining of the machine learning model. In this way, the machine learning model has a reliable confidence measure for the sample data that is received and the output that is processed. Thus, there is provided a machine learning inference system which is suitable for mission-critical applications. Preferably, the machine learning inference system also comprises a data minder module and a data remapping module as significant improvement in performance and stability of the machine learning model is produced by these modules in combination. This improvement goes beyond the sum of the individual improvements achieved by each of the confidence module, the data minder module and the data remapping module.

## Brief Description of the Drawings

Embodiments of the invention are described below, by way of example, with reference to the following drawings, in which:

Fig. 1 shows a known machine learning inference system.

Fig. 2 depicts a machine learning inference system according the one embodiment of the sixth aspect of the invention.

Fig. 3A depicts a confidence module for a machine learning inference system according to the first aspect of the invention. Fig. 3B depicts an example processing for the confidence module of Fig. 3A. Fig. 3C depicts the accuracy obtained using a confidence module according to the first aspect of the invention against the Softmax operator.

Fig. 4 depicts a data minder module for a machine learning inference system according to the second aspect of the invention.

Fig. 5 depicts further details of the data minder module of Fig. 4.

Fig. 6 depicts a data remapping module for a machine learning inference system according to the third aspect of the invention.

Fig. 7 depicts a machine learning inference system according another embodiment of the sixth aspect of the invention.

Fig. 8 depicts an adversarial defence module for a machine learning inference system according to the fourth aspect of the invention.

Fig. 9 depicts an update module for a machine learning inference system according to the fifth aspect of the invention

Fig. 10 depicts a data interpretability module for a machine learning inference system according to the invention.

Fig. 11A, Fig. 11B and Fig. 11C depicts an example use of machine learning inference system according to the invention.

Fig. 12A, Fig. 12B, Fig. 12C and Fig. 12D depict various hardware embodiments for implementing the various aspects of the invention.

## Detailed Description

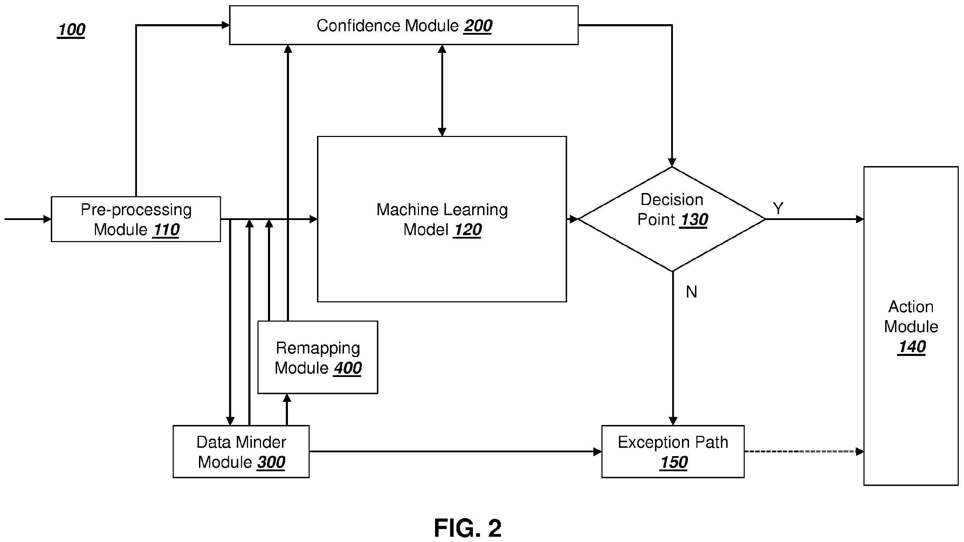

Fig. 2 shows a machine learning inference system 100 according to one embodiment of the invention. Like known machine learning inference system 100P of Fig. 1, machine learning inference system 100 comprises pre-processing module 110, machine learning model 120, decision point 130, action module 140, and exception path 150. The function each of these components is discussed further below. The person skilled in the art will appreciate that not all of these modules need to be present, and in alternative embodiments the machine learning inference system 100 may comprise only machine learning model 120.

Pre-processing module 110, like pre-processing module 110P, is configured to perform initial manipulation of sample data before processing by the machine learning model 120. For example, if the sample data is an image containing an official document, then the pre-processing module 110 may perform image transformations to rotate and crop the image such that the image contains only the official document, thereby putting the sample data in a similar format as the training data which is made up of images that contain only the official document. The phrase "sample data" refers to data which is processed by the machine learning model 120 when machine learning model 120 is used "in the wild", i.e. not training data. For the purpose of illustration, the sample data generally referred to herein are images containing a face and/or an official document. However, the invention is not limited to these particular types of sample data. Other sample data for use with the invention includes images containing other objects for detection, for example letters of the digits, letters, a traffic sign, an animal, etc. As mentioned above, sample data received "in the wild" can be problematic because such data may not be representative of the training data used to train machine learning model 120.

From the pre-processing module 110, sample data is sent to machine learning model 120 where the sample data is processed to produce an output. Machine learning model 120 is an already trained machine learning model, which is trained for a particular application, preferably a mission-critical application, using training data. Mission-critical applications include, for example, identify verification, medical applications, control of electrical grids, nuclear power plants, production line controls, air traffic controls. The training is performed using training data, and typically 1000 to 2000 items of training data are required.

Machine learning model 120 preferably takes the form of a deep neural network. A deep neural network is a class of machine learning model that uses multiple layers to progressively extract higher level features from the sample data. For example, in image processing, lower layers may identify edges, while higher layers may identify the concepts such as digits, letters, or faces. Examples of deep neural networks include recurrent neural networks, deep convolutional neural networks, recursive neural networks, unsupervised pretrained networks, autoencoders, deep belief networks, generative adversarial networks, etc. However, the person skilled in the art will appreciate that a suitable machine learning model 120 for machine learning inference system 100 is not limited to any of the particular machine learning model types mentioned here.

As mentioned, machine learning model 120 produces an output based on the sample data. The exact form of the output produced by the machine learning model 120 depends on the type of machine learning model that is implemented in machine learning inference system 100, and the application that the machine learning model 120 is used in. For example, an identity verification application may include a machine learning model 120 that determines whether an official document (e.g. a passport, a driving licence, utility bill) is genuine. In this example, the sample data which is proceed by the machine learning model 120 is an image of an official document, and the output of the machine learning model 120 in indication of the authenticity of the official document. Generally speaking, machine learning model 120 outputs a classification or a decision.

The output of machine learning model 120 is received at decision point 130. Decision point 130 determines whether the output of machine learning model 120 should be accepted for action or not. In particular, decision point 130 determines if the output of machine learning model 120 is within an acceptable range for action. There may be two or more acceptable ranges corresponding to two or more actions. For instance, in the identity verification example mentioned above, the output of the machine learning model 120 may be scored out of 1, and sample data with an output greater than 0.95 may be deemed to be an authentic document, whereas sample data with an output less than 0.90 may be deemed to not be an authentic document. Thus, in this example, for outputs of greater than 0.95 and less than 0.90 are accepted for action, whilst outputs in the range of 0.90 to 0.95 are not accepted for action.

If an output of machine learning model 120 is accepted by decision point 130, the output is sent to be actioned by action module 140. Action module 140 is responsible for sending instructions to be used by the application based on the output. For instance, in the identity verification example mentioned above, if an output of 0.98 is sent from decision point 130 to action module 140, action module 140 then sends appropriate instructions to the application to flag that the official document is authentic.

If an output of machine learning model 120 is not accepted by decision point 130, the output is sent to exception path 150, along with the sample data on which the output is based. The purpose of exception path 150 is to allow a human operator to manually review the outcome and/or its associated sample data to determine what the correct outcome. The corrected outcome may then be sent to action module 140 to be actioned. Human intervention of this kind is typically referred to as "human-in-the-loop". A known problem with systems involving human-in-the-loop is that the time taken to send an action from action module 140 to the application is significantly increased. This is because the sample data and/or outcome can become queued on the exception path with other sample data for review by a human operator. Practically, this means that for any application with machine learning inference system 100 involving human-in-the-loop, there can be a significantly delay between submitting the sample data through the application and for the outcome of the sample data to be actioned. This means, for example, that there may be a several hour to several day wait for identity to be verified, which is not suitable in many instances. Therefore, minimising the number of sample data that has to be sent to exception path 150 is advantageous.

In addition to the known components, machine learning inference system 100 of Fig. 2 includes confidence module 200, data minder module 300, and data remapping module 400. These modules are discussed in detail below. The person skilled in the art will appreciate that not all of these modules need to be present, and in alternative embodiments the machine learning inference system 100 may comprise any one or more of these modules. For example, machine learning inference system 100 may comprise the confidence module, or the confidence module and the data minder module.

*Confidence Module*

Confidence module 200 is communicatively coupled to pre-processing module 110, data minder module 300, data remapping module 400, machine learning model 120, and decision point 130. The purpose of confidence module 200 is to provide a way to measure confidence of the output of the machine learning model 120. In known machine learning inference systems 100P, the Softmax operator is used as a confidence measure, but as discussed above this is not sufficient to maintain the high and consistent performance levels required for machine learning model 120 in mission-critical applications.

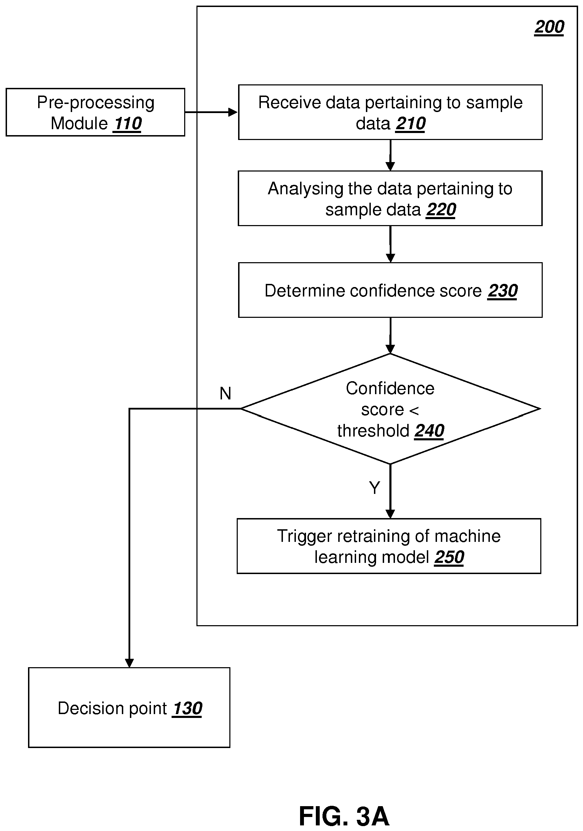

As shown in Fig. 3A, confidence module 200 is configured to perform the following steps: receiving data pertaining to the sample data, wherein the sample data is the data to be processed by the machine learning model (step 210); analysing the data pertaining to the sample data using a mathematical operation and/or a machine learning algorithm, wherein the machine learning algorithm is not a deep machine learning algorithm (step 220); determining a confidence score for the machine learning model based on the analysis (step 230); and, only if the confidence score is below a predetermined confidence threshold (step 240), triggering retraining of the machine learning model (step 250). If the confidence score is above the predetermined confidence threshold (step 240), then the machine learning model 120 output may be confirmed at decision point 130. In this way, the machine learning inference system 100 is able to provide a confidence bound on the predictability of the machine learning model 120 that can be used to maintain performance, and trigger retraining of the machine learning model 120 should the confidence be lower than is acceptable.

More specifically, in step 210, confidence module 200 receives data pertaining to the sample data. Here "data pertaining to the sample data" a reference to data that relates to the sample data. Data pertaining to the sample data comprises one or more of: the sample data itself, remapped sample data, metadata of the sample data, the output of machine learning model 120 received by processing the sample data, sample log data from machine learning model 120 when processing the sample data, and a Softmax score calculated by applying a Softmax operator to the output of the machine learning model 120. Other suitable data pertaining to the sample data may also be used. This data is received at confidence module 200 from various other modules and components of machine learning inference system 100. In particular, sample data is received from pre-processing module 120, remapped sample data is received from data remapping module 400, metadata of the sample data is received from pre-processing module 120, the output of the machine learning model 120 is received from machine learning model 120, sample log data is received from adversarial defence module 700, and Softmax score is received from decision point 130.

In step 220, the data pertaining to the sample data is analysed using a mathematical operation and/or a machine learning algorithm that is not a deep machine learning algorithm (i.e. does not have multiple layers between the input and output layers). Using a mathematical operation and/or a machine learning algorithm that is not a deep machine learning algorithm is advantageous as the confidence score derive is more robust than a confidence score derived using a deep machine learning algorithm. This is because, as mentioned above, the existence of adversarial examples casts doubt on the robustness of deep machine learning algorithms. This increased robustness is particularly useful for machine-critical applications, where the confidence in the output of machine learning algorithm 120 is of upmost importance. The aim of step 220 is to yield a numerical value, preferably between 0 and 1, that indicates confidence in the output of the machine learning model 120, which can be used as a confidence score.

There are many methods for calculating a confidence score in step 220. In general, methods for calculating the confidence score are either based on testing the robustness of the machine learning model 120 around the sample data, or providing an alternative method to calculate the outcome which does not rely on a deep machine learning algorithm. Thus, a wide range of machine learning algorithms and/or mathematical operations may be used. Example machine learning algorithms include a random decision forest, a regression algorithm, and the like. An example mathematical operations includes a distribution based on the Softmax operator.

One example method for step 220 that is based on providing an alternative method to calculate the outcome which does not rely on a deep machine learning algorithm is template matching. Template matching involves comparing the sample data to a template data and determining whether similar features are present in both the sample data and the template data. For example, a template image may include a text field, and the method for step 220 would determine whether this text field is present in a sample image. These feature comparisons may be repeated for a plurality of features to determine the confidence score for the sample data.

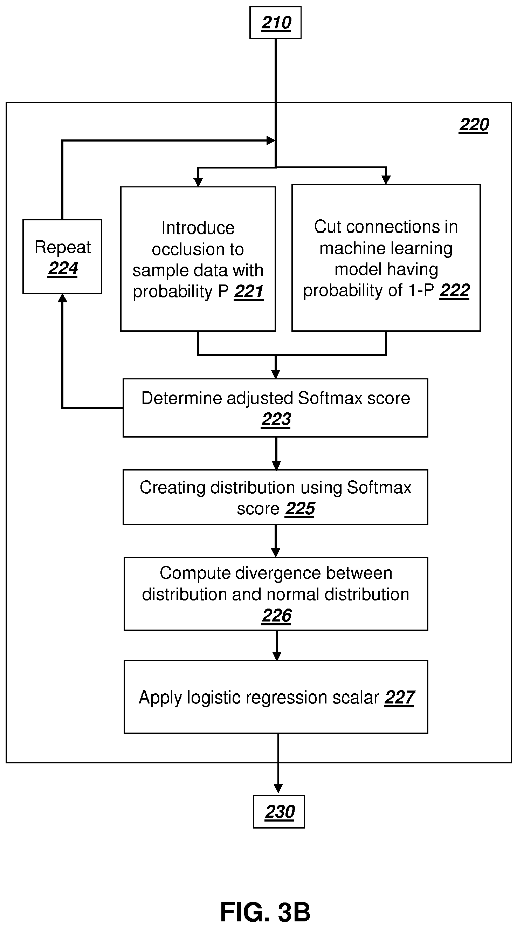

Another example method for step 220 is shown in Fig. 3B. This example is based on testing the robustness of the machine learning algorithm around the sample data. This example method is suitable for sample data that takes the form of an image and machine learning model 120 that takes the form of a classifier. For instance, the sample data may be an image of an official document, and the machine learning model 120 may classify whether an authentic official document is present in the image. The method of Fig. 3B tests how the decision of the machine learning model 120 changes under factors of variation. These factors of variation are: perturbation of the input image (i.e. occlusion at a pixel-level or block-of-pixel level) and perturbation of the connection in the machine learning model 120. "Connections" here refers to the connections between the layers of the machine learning model 120. By applying different perturbations like this K times, a distribution of the output of the machine learning model 120 is created, rather than just a single value.

Referring to Fig. 3B, the perturbation of the input image is performed at step 221 by introducing occlusion to the sample data having a probability P, for example by blocking one or more pixels in the sample data, and the perturbation of the connections in the machine learning model 120 is performed at step 222, for example by cutting connections in the machine learning model 120 having a probability 1-P. These perturbations are randomly generated so that each time step 221 is repeated a different one or more pixels are blocked in the sample data, and each time step 222 is repeated different connections in the machine learning model 120 are cut. In step 223, the output of the machine learning model 120 is recalculated (i.e. to take into account the sample data having additional occlusion from step 221 or the machine learning model with cut connections from step 222), and an adjusted Softmax score is determined using Eq. 1 from the recalculated output. This Softmax score is considered an adjusted Softmax score in view step 211 and step 222. Step 221/222 and step 223 is then repeated K times to create K number of adjusted Softmax scores. Higher values of K yield more accurate confidence scores, but at the cost of increased computation. Nevertheless, it is expected that K should be at least 3. Note that only one of step 221 and step 222 needs to be performed per repeat; steps 221 and 222 are equivalent and are therefore are mutually exclusive.

Once K number of adjusted Softmax scores are calculated, these adjusted Softmax scores are used to create a distribution in step 225. For each repeat k of the total number of repeats K, a value based on adjusted Softmax score $S_k$ using Eq. 2. These values are then used to form the distribution D.

$$| 0.5 - S_k| \ \text{ (for } k = 0, 1, 2, 3 \dots K) \qquad \text{[Eq. 2]}$$

Then, at step 226, the divergence between the created distribution and a uniform distribution is computed. For this, the Kullback-Leibler divergence (KLdiv) may be used, which is a measure of how one probability distribution (i.e. the distribution created in step 225) is different from a second, reference probability distribution (i.e. the uniform distribution). This calculation is shown in Eq. 3.

$$C = \text{KLdiv} (D | \text{Uniform}) \qquad \text{[Eq. 3]}$$

This divergence can be thought of as an unscaled confidence score C. This unscaled confidence score represents how far the distribution of the machine learning model 120 output differs from a uniform distribution (i.e. 100% certainty). At step 227, this unscaled confidence score C is turned into a scaled confidence score using a logistic regression. The scaled confidence score has a value between 0 and 1, where 0 represents no confidence that the output of the machine learning model 120 is correct, and 1 represents full confidence that the output of the machine learning model 120 is correct.

A further step 228 (not shown) may be performed to improve the confidence score. This step involves calculating the Brier score, B, which measures the accuracy of probabilistic predictions, based on the scaled confidence score.

Referring back to Fig. 3A, step 230 is to determine a confidence score based on the analysis in step 220. This step is simple as the analysis step 220 yields a numerical value, preferably between 0 and 1, that indicates confidence.

Step 240 is to determine whether the confidence score is below a predetermined confidence threshold. By "below a predetermined confidence threshold" it does not mean that the confidence score has to take a numerical value which is lower than the predetermined confidence threshold value (although it may be). Instead, the concept of "below the predetermined confidence level" means that the confidence score indicates that confidence is less than the predetermine confidence threshold. For example, if the confidence score takes a range between 0 and 1, where 0 is full confidence and 1 is no confidence, then "lower than a predetermined confidence threshold" means a numerical value above the predetermined confidence threshold, which itself takes a lower value (e.g. 0.2). Conversely, if the confidence score takes a range between 0 and 1, where 0 is no confidence and 1 is full confidence, then "lower than a predetermined confidence threshold" means a numerical value lower the predetermined confidence threshold, which itself takes a higher value (e.g. 0.8). The predetermined confidence threshold value depends on the particular application that machine learning inference system 100 is being used for as some applications are be more forgiving for outputs that are not fully accurate. Typical values of confidence score that takes a range between 0 and 1, where 0 is no confidence and 1 is full confidence, for a more forgiving application, may be 0.75, 0.8, 0.85 and 0.9. Typical values of the confidence score for a less forgiving application may be 0.9, 0.95, and 0.99.

If the confidence score is found to be below the predetermined confidence threshold is step 240, then in step 250 the machine learning model 120 is triggered into being retrained. This is achieved by sending a message from the confidence module 200 to the update module 500. The data pertaining to the sample data which triggered this retraining may be sent to exception path 150 for review by a human operator. If the confidence score is not found to be below the predetermined confidence threshold in step 240, then the output of the machine learning model 120 may be sent to decision point 130. Alternatively, if the output of the machine learning model 120 is already present at decision point 130, then a confirmation may be sent to decision point 130.

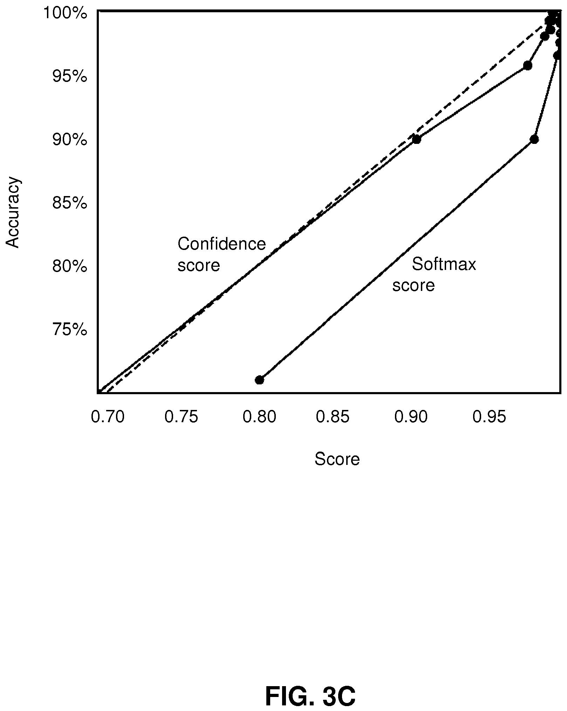

Fig. 3C shows the confidence score calculated by the confidence module 200 using the steps of Fig. 3B and the Softmax score calculated using the Softmax operator against accuracy. In Fig. 3C, a perfect score should have a linear relationship with accuracy, as shown by the dashed line. Scores which are left of the dashed line are underconfident compared to the accuracy, whilst scores which are right of the dashed line are overconfident compared to the accuracy. Overconfidence is problematic for mission-critical applications because the outputs of machine learning model 120 are less accurate than anticipated, whilst underconfidence is less of an issue. As can be seen from Fig. 3C, the confidence score calculated by the confidence module 200 is much closer to the perfect score, and is less overconfident compared to the Softmax score. Thus, confidence score calculated by the confidence module 200 achieves improved performance level for machine learning model 120 in mission-critical applications over the use of the Softmax operator.

*Data Minder Module*

Data minder module 300 is communicatively coupled to pre-processing module 110, exception path 150, data remapping module 400, and confidence module 200. The purpose of data minder module 300 is to overcome the lack of generalisation of the machine learning model 120. This lack of generalisation means that machine learning model 120 gives inaccurate outputs for sample data that is not sufficiently similar to the training data.

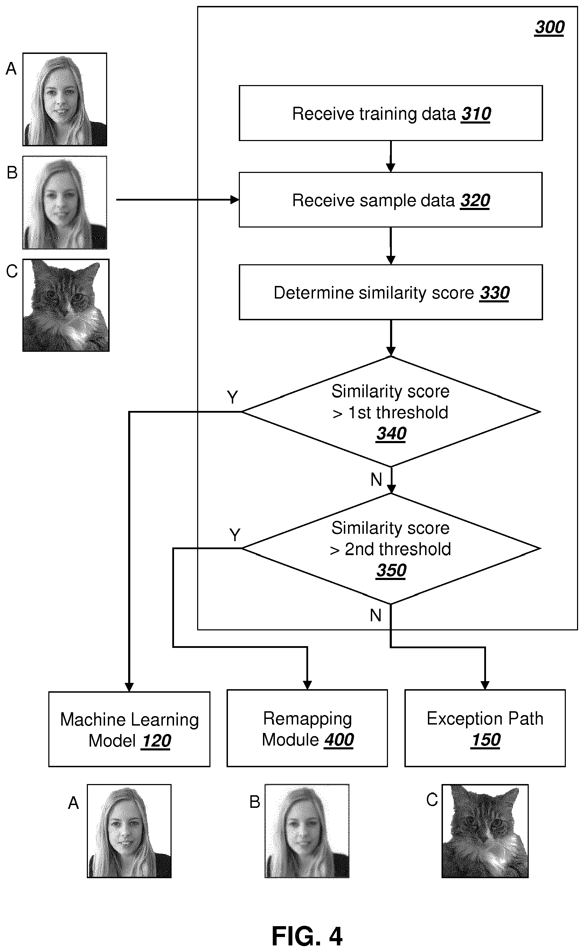

With reference to Fig. 4, data minder module 300 is configured to perform the following steps: receiving training data, wherein the training data is the data used to train the machine learning model 120 (step 310); receiving the sample data prior to the machine learning model 120 (step 320); comparing, using a data representation model, the sample data to the training data to determine a similarity score (step 330); then, only if the similarity score is above or equal to a first predetermined similarity threshold, sending the sample data to the machine learning model for processing (step 340). In this way, the data minder module 300 evaluates sample data before the sample data is provided to the machine learning model 120 for processing, and then restrict sample data which is not deemed suitable for being processed by the machine learning model 120. This means that the machine learning model 120 is no longer required to be able to generalise to process sample data that is not sufficiently similar to the training data. As a consequence, the number of inaccurate outputs of machine learning model is reduced.

Data minder module 300 also identifies sample data that has a lower similarity score that the first predetermined similarity threshold, but higher than a second predetermined similarity threshold, for sending to data remapping module 400. This is because, for a machine learning model 120 which is a classifier, sample data falling between the first and second predetermined similarity thresholds are typically sample images found to contain the object to be classified, but that have poor image quality which cause the sample data to fall marginally outside of the classification manifold. This poor image quality can be rectified using data remapping module 400, as explained in further detail below. Accordingly, data minder module 300 is configured to send sample data to data remapping module 400 if the similarity score is below the first predetermined similarity threshold but above or equal to a second predetermined similarity threshold.

Data minder module 300 also identifies sample data that has a lower similarity score that the second predetermined similarity threshold. This is because, for a machine learning model 120 which is a classifier, sample data falling below the second predetermined similarity threshold are typically have extremely poor image quality or do not contain the object to be classified. This causes the sample data to fall significantly outside of the classification manifold. Such sample data is sent to exception path 150 to determine why the sample data falls so significantly far outside of the classification manifold. Accordingly, data minder module 300 is configured to send the sample data to exception path 150 if the similarity score is below a second predetermined similarity threshold. Notably, data minder module 300 does not send sample data having a similarity score lower than the second predetermined similarity threshold to the machine learning model 120.

Fig. 4 shows three examples of sample data, denoted image A, image B and image C respectively. For these examples, the machine learning model 120 is trained to detected faces, so the training data contains images with faces. Image A has a similarity score which is above the first predetermined similarity threshold, since image A is the most similar to the training data. Accordingly, image A is sent to machine learning model 120 for processing. Image B has a similarity score which is below the first predetermined similarity threshold but above the second similarity threshold, since image B, since image B is similar to the training data but is blurred. Accordingly, image B is sent to data remapping module 400 to remove the blur. Image C has a similarity score which is below the second predetermined similarity threshold, since image C is not similar to the training data. Accordingly, image C is sent to exception path 150 for review by a human operator.

More particularly, in step 310 data minder module 300 receives training data that was used to train the machine learning model 120, and stores the training data in memory. At step 320, sample data is received from pre-processing module 110 before being processed or sent to machine learning model 120. The sample data is also stored in memory.

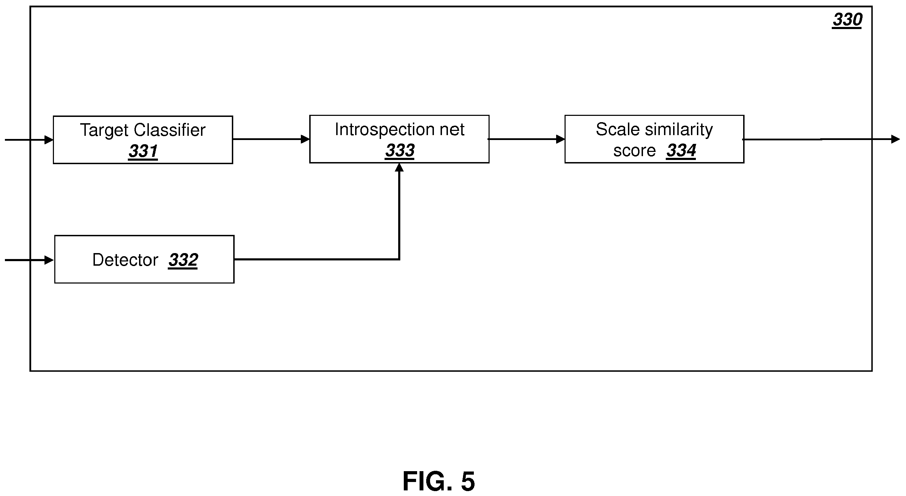

Next, at step 330, the data minder module 300 compares, using a data representation model, the sample data to the training data to determine a similarity score. Generally speaking, data representation models describe the structure of data within a given domain and, by implication, the underlying structure of that domain itself. Thus, using a data representation model involves determining the structure of the training data and the structure of the domain of the training data. Then, the sample data is compared to the training data within this domain to determine a similarity score. A particular example of a method for step 330 is detailed in Fig. 5.

Referring to Fig. 5, sample data is received at a target classifier 331 and a detector 332. The target classifier 331 determines logit activations which are sent to introspection net 333. The detector determines reconstruction errors which are also sent to introspection net 333. The introspection net 333 evaluates the logit activations and the reconstruction error to produce an unscaled similarity score which indicates how far the sample falls outside the manifold of the training data. In this way, introspection net leverages observations regarding the differences between training data and the sample data. As a final step 334, the unscaled similarity score is scaled so that the similarity score takes a value between 0 and 1.

In the example of Fig. 5, target classifier 331 is a deep convolutional neural network trained on the training data. Detector 332 is an autoencoder trained on the training data, which aims to learn the manifold of the training data. The autoencoder is based on a detector in Meng, D. and Chen, H., 2017. Magnet: a two-pronged defense against adversarial examples. In Proceedings of the 2017 ACM SIGSAC Conference on Computer and Communications Security (pp. 135-147). ACM. Introspection net 333 is a neural network having three linear layers. The linear layers have batch normalization, dropout and ReLu after the first two linear layers. The scaled similarity score is calculated in step 334 using Eq. 4.

$$S'(S) = 1/(1 + e^{-S}) \qquad \text{[Eq. 4]}$$

Where S is the unscaled similarity score and S' is the similarity score. This provides a similarity score value of between 0 and 1.

When the scaled version of the similarity score is used in data minder module 300, where 1 indicates that the sample data is within the manifold of the training data, and 0 indicates that the sample data is infinitely far from the manifold of the training data, then the first predetermined similarity threshold may take a value of at least 0.95. The second predetermined similarity threshold may take a value between 0.5 and 0.95, for instance 0.75, 0.90

*Data remapping module*

Data remapping module 400 is communicatively coupled to the data minder module 300, the machine learning model 120 and the confidence module 200. The purpose of data remapping module 400 to adapt sample data before the sample data is provided to the machine learning model 120 for processing, in order to make the sample data more similar to the training data. This means that the machine learning model 120 does not have to generalise to process sample data that is not sufficiently similar to the training data. As a consequence, the number of inaccurate outputs of machine learning model 120 is dramatically reduced.

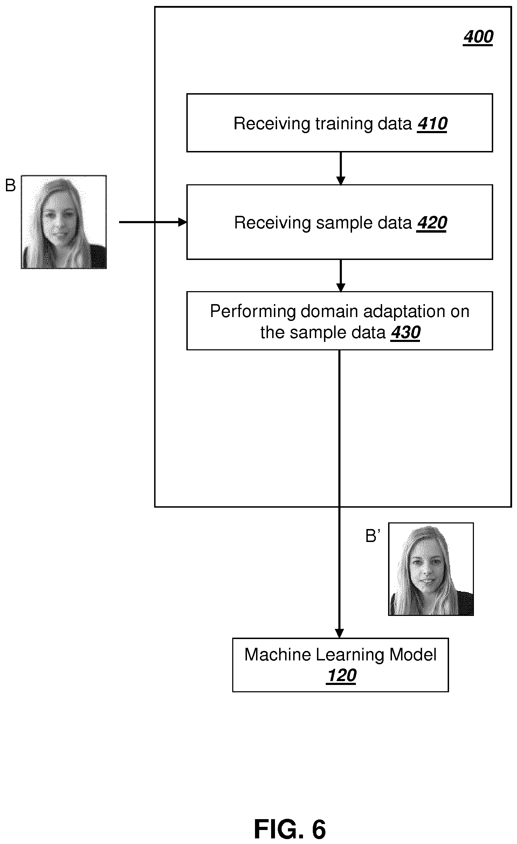

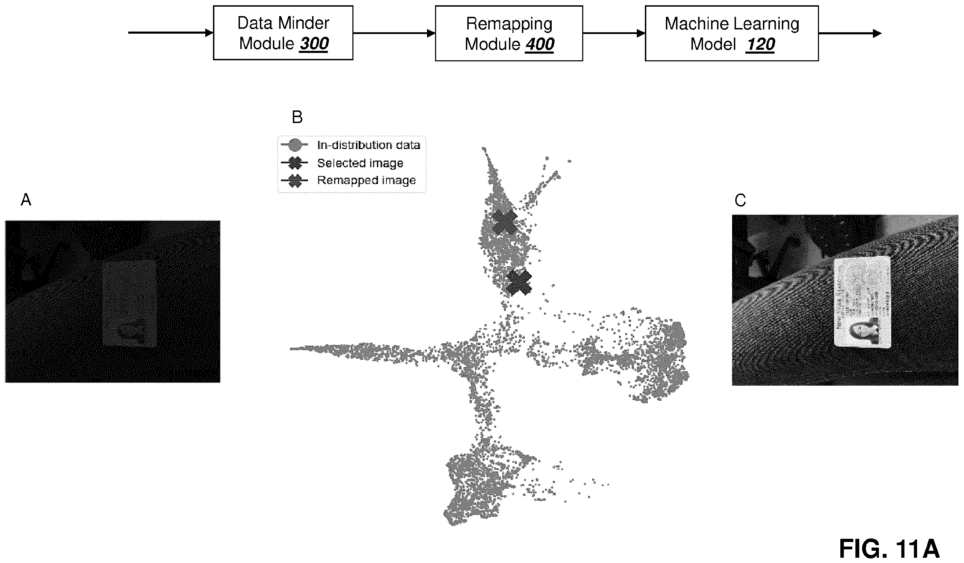

As shown in Fig. 6, data remapping module 400 is configured to perform the following steps: receiving training data, wherein the training data is the data used to train the machine learning model (step 410); receiving the sample data prior to the machine learning model (step 420); performing domain adaptation on the sample data to increase the similarity between the sample data and the training data (step 430); and sending the adapted sample data to the machine learning model 120 for processing. An example sample image B and example adjusted sample image B' is shown in Fig. 6. A further example is shown Fig 11A, where the sample image denoted A and the adjusted example image denoted C.

In further detail, at step 410 the data remapping module 400 receives the training data, i.e. all the data that was used to train the machine learning algorithm 120.

At step 420 the sample data is received by the data remapping module 400. This sample data is received from data minder module 300 when the similarity score of the sample data is above or equal to a first predetermined similarity threshold and below a second predetermined similarity threshold, as discussed above. As mentioned above, for a machine learning model 120 which is a classifier, sample data falling between the first and second predetermined similarity thresholds are typically the images found to contain the object to be classified, but that have poor image quality which cause the sample data to fall marginally outside of the classification manifold. Images received "in the wild" often have poor image quality caused by poor lighting, quality degradation and interfering signals. In particular, these and other factors cause visual impairments in the image, causing reduced sharpness, brightness, colour and contrast, and thus lower image quality. An example image having poor image quality by virtue of reduced sharpness is shown at image B of Fig. 6.

The next step 430 is to perform domain adaptation on the sample data. The purpose of domain adaptation is to adjust the sample data in such a way so as to put the adjusted sample data within the classification manifold of the training data. There are many known methods for performing domain adaptation that are suitable for use in step 430, and may be used alone or in combination with one another. For example, deep domain adaptation may be used, in particular deep domain adaptation using a deep adversarial network, see Csurka, G. ed., 2017. Domain adaptation in computer vision applications (pp. 1-35). Cham: Springer. In another example, domain adaptation of step 430 may be performed based on one or more of histograms, colour bands, and contrast equalisation. More particularly, by measuring the distribution of intensity and colour bands on the given sample data, and applying a Histogram Correction Procedure (HCP) to the sample data, the sample data is adjusted to improve the enhancement level of sharpness, brightness, colour and/or contrast. This approach restores the low-level image statistics to a well-balanced distribution, so as to maximize the distinguishable factors of respective feature for processing by machine learning model 120. Low-frequency distortion is another factor that leads to poor image quality, in particular motion blur, sensor blur and out-of-focus blur. It is proposed to use an Iterative Deconvolution Procedure (IDP) for domain adaptation in step 430 for recovering underlying image details when such blur is present in the sample data.

Finally, after the sample image has been adapted in step 430, the adapted sample image is sent to machine learning model 120 for processing. Since the adjusted sample data is within the classification manifold of machine learning model 120, the accuracy of the output of the machine learning model 120 is improved. The adapted sample data image is also sent to confidence module 200 to determine a confidence score using the adapted sample data instead of the sample data.

Referring back to Fig. 2, machine learning inference system 100 includes confidence module 200, data minder module 300 and data remapping module 400. The inventors have found that using these modules in combination in machine learning inference system 100 yields significantly improved performance and stability of machine learning model 100 over known machine learning inference system 100P of Fig. 1. In particular, the improvement has been found to go beyond the sum of the individual improvements achieved by each of the confidence module, the data minder module and the data remapping module. It is reasoned that this is because the data minder module 300 and the data remapping module 400 ensure that the machine learning model 120 only processes sample data which is within the manifold of the machine learning model 120 created by the training data, whilst the confidence module 200 ensures that the manifolds are robust.

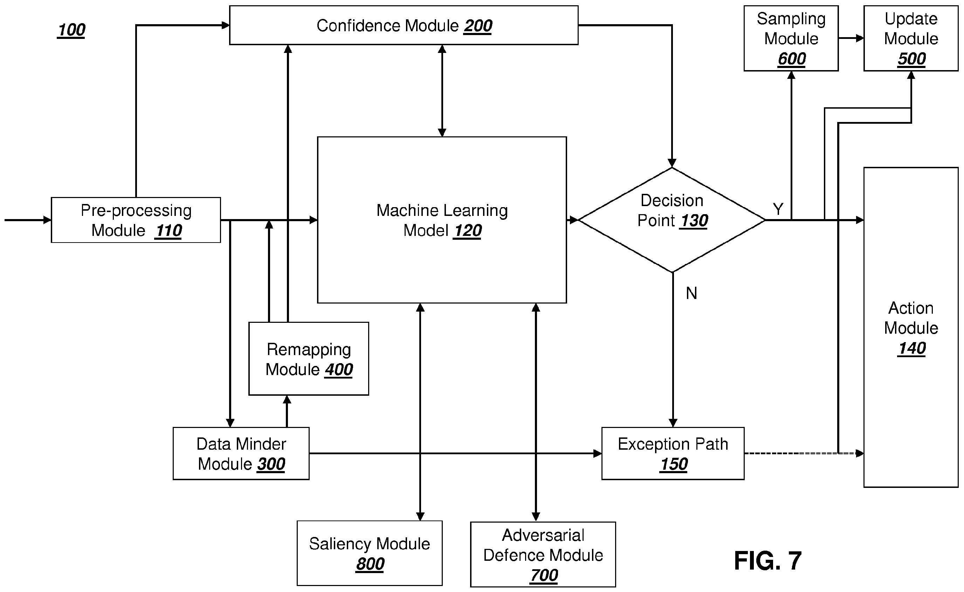

Fig. 7 shows a machine learning inference system 100 according to another embodiment of the invention. Machine learning inference system 100 of Fig. 7 includes all of the modules of machine learning inference system 100 of Fig. 2, which are the same as those described above. In addition, machine learning inference system 100 of Fig. 7 includes an update module 500, a sampling module 600, an adversarial defence module 700, and data interpretability module 800. The person skilled in the art will appreciate that not all of these modules need to be present, and in alternative embodiments the machine learning inference system 100 may comprise any one or more of these additional modules.

*Adversarial Defence Module*

Adversarial defence module 700 is communicatively coupled to the machine learning model 120. The purpose of adversarial defence module 700 is to defend against adversarial attacks, which are sophisticated attacks that involve particular of distortions that trick machine learning model 120 into making a false prediction.

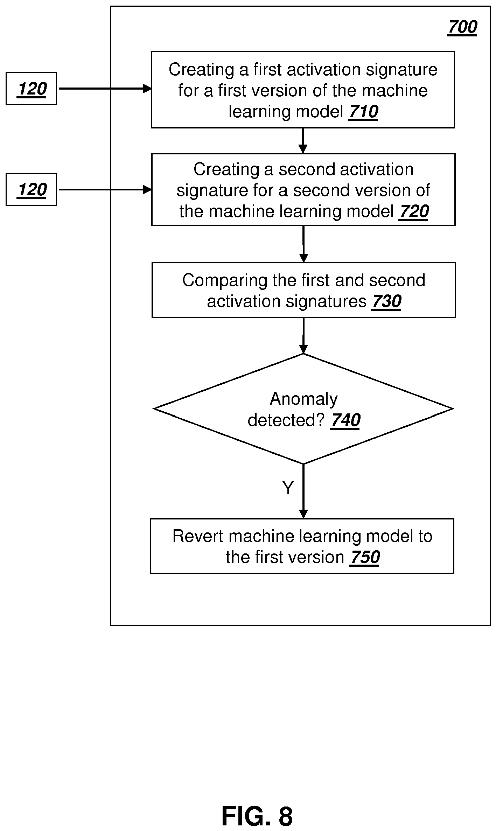

With reference to Fig. 8, adversarial defence module 700 is configured to perform the following steps: creating a reference activation signature for the machine learning model at a first point in time (step 710); creating a sample activation signature for a second version of the machine learning model at a second point in time, subsequent to the first point in time (step 720); comparing the sample activation signature to the reference activation signature to detect an anomaly in the sample activation signature (step 730); and if an anomaly is detected (step 740), sending the sample data to an exception path (step 750). Thus, adversarial defence module 700 defends against adversarial attacks by detecting signatures in the activation signature of the machine learning model. In particular, by identifying anomalies in the activation signature over time, adversarial attacks are be detected and sent to an exception path for review by a human operator.

In further detail, in step 710, a reference activation signature for machine learning model 120 is created at a first point in time. The first point in time is after the machine learning model 120 has been trained and before the machine learning model 120 is released into the wild to process sample data. The reference activation signature represents all of the activations within the hidden layers of machine learning model 120 from processing the training data.

In step 720, a sample activation signature for machine learning model 120 is created at a second point in time. The second point in time is subsequent to the first point in time, thus the second point in time is after sample data has been processed by machine learning model 120. The sample activation signature represents all of the activations within the hidden layers of machine learning model 120 from processing the sample data.

The reference and sample activation signatures in steps 710 and 720 are derived from log data of machine learning model 120 received by performing algorithmic computations on the machine learning model 120 during processing. For the reference activation signature in step 710, the log data is reference log data from processing of training data. For the sample activation signature in step 720, the log data is sample log data from processing of sample data. Then, a first model interpretability algorithm is performed on the log data to form the activation signature. As noted above, the activation signatures represent all of the activations within the hidden layers of the machine learning model; this is what the first model interpretability algorithm provides. It is noted that the training data may be made up of a plurality of individual training items (e.g. a plurality of images). In this case, the reference activation signature is an average of the reference activation signatures of each of the plurality of individual training items.

The next step, step 730, is to compare the first and sample activation signatures to detect an anomaly in the sample activation signature. One method for detecting anomalies is to use a single class support vector machine; this is a supervised method. An alternative method for detecting anomalies is to use histogram thresholding; this is an unsupervised method. Anomalies detected in the activation signature in this way are indicative of an adversarial attack and the sample data being an adversarial example.

At step 740, if an anomaly is detected, then the adversarial defence module 700 proceeds to step 750. At step 750, the adversarial defence module 700 sends the sample data to the exception path 150. At the exception path 150, a human operator reviews the sample data. Moreover, the human operator can investigate the adversarial attack by, for example, alerting the source of the sample data. Adversarial defence module 700 also sends an alert to indicate to a human operator that an adversarial attack has occurred (at least potentially) as the reason for the sample data being sent to exception path 140.

Sample data associated with adversarial attacks are used to form one or more detection modules (not shown). Such detection modules use the sample activation signature of the sample data associated with an adversarial attack in order to detect adversarial sample data, i.e. subsequent sample data associated with the same adversarial attack. Adversarial sample data is then sent to exception path 150 for review by a human operator.

*Update Module*

Update module 500 is communicatively coupled to decision point 130, exception path 150, sampling module 600, confidence module 200 and data minder module 300. Update module 500 is also communicatively coupled to machine learning model 120. The purpose of the update module 500 is to cause machine learning model 120 to be updated automatically, without human intervention. By "updated" it is meant that at least the machine learning model 120 is retrained using sample data, and then redeployed. Automatic updates removes the need for a human to intervene to update the machine learning model 120, and also reduces the occurrence and severity of performance drops since the machine learning model 120 updates automatically before a human would typically intervene.

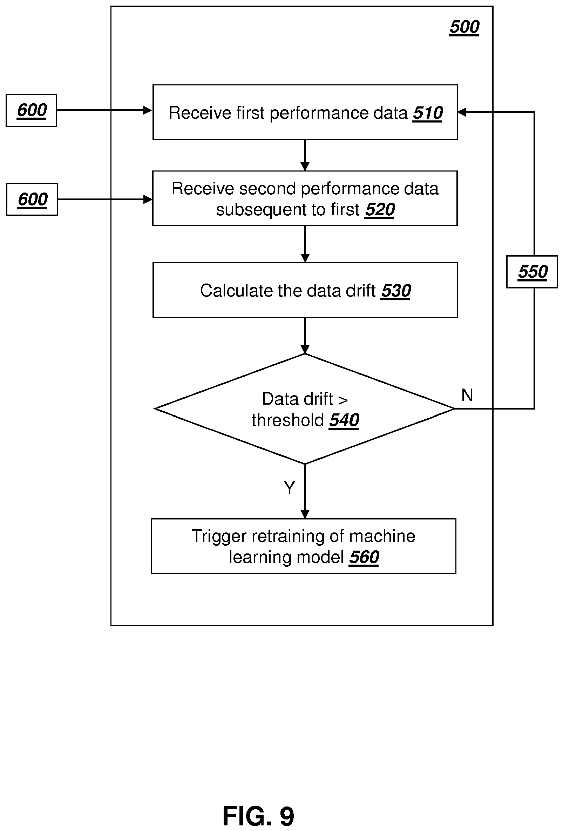

As shown in Fig. 9, update module 500 is configured to perform the following steps: receiving first performance data relating to the performance of a machine learning model at a first point in time and storing the first performance data (step 510); receiving second performance data relating to the performance of the machine learning model at a second point in time, subsequent to the first point in time, and storing the second performance data (step 520); calculating a data drift for the machine learning model using the second performance data and the first performance data (step 530); if the data drift is above a first predetermined drift threshold (step 540), triggering retraining of the machine learning model 120 (step 550).

More particularly, in steps 510 and 520, first and second performance data is received by update module 500 from one or more processing modules in machine learning inference system 100. For example, performance data may be received from one or more of: sampling module 600, confidence module 200 and data minder module 300. The first performance data received at update module 500 before the second performance data is received at update module 500. The frequency of receipt of performance data by update module 500 depends on, for example, the frequency that the machine learning model 120 processes sample data, the frequency of sampling by sampling module 600, etc. Accordingly, the time between receipt of the first performance data and the second performance data may range from, at a minimum, the time taken to process sample data by machine learning model 120 to hours or days. The latter is useful to determine long-term trends in performance.

In one embodiment, first and second performance data may relate to the same performance metric, i.e. a first performance metric, to make calculating the data drift in step 530 easier. Performance metrics that are suitable for use with the invention include: FAR (False Acceptance Rate), which identifies the rate at which the machine learning model 120 makes a false positive decision; FRR (False Rejection Rate), which identifies the rate at which the machine learning model 120 makes a false negative decision; mistake confidence, which identifies how confidently machine learning model 120 made mistakes. The latter is calculated by looking at histograms of confidences and how noisy these histograms are, as well as activation signatures tightness, confidence score from confidence module 200 scores and others. In this embodiment, update module 500 may additionally receive performance data relating to a different performance metric, i.e. a second performance metric, a third performance metric, a fourth performance metric, etc. in an alternative embodiment, the first and second performance data may relate to different performance metrics. In a further alternative embodiment, the first and second performance data may combine a plurality of performance metrics.

In step 530, the data drift is calculated using the first and second performance metrics. Data drift identifies that the statistical properties of the sample data, which the machine learning model 120 is trying to predict, change over time in unforeseen ways. Data drift is also referred to as concept drift. The data drift is calculated based on the similarity score from data minder module 300 from the first and the second points in time in combination with the first and second performance metrics.

Next, in step 540, it is determined whether the data drift is above a first predetermined drift threshold. The level of the first predetermined drift threshold depends on the application that machine learning model 120 is being used for as some applications have a higher tolerance for drift. Moreover, in some applications the data representation model is more likely to change. For example, in an identity verification application, the data representation model can be expected to change from time to time due to a new version of an official document being released. Conversely, in a medical application, the data representation model is more likely to be consistent over time. In any event, the predetermined drift threshold is set such that small numbers of noise events do not cause an update to be triggered, whereas large numbers of noise events, or significant noise in a particular clusters of the data representation model, do trigger an update..

If the data drift is below the first predetermined drift threshold, then update module 500 continues to monitor the performance data by the loop 550, which causes steps 510, 520, 530 and 540 to be repeated continuously. The second performance data of the original step 520 may be used in the repeated step 510. In other words, the update module 500 receives at third point in time, subsequent to the second point in time, third performance data and stores this third performance data. Then, update module 500 calculates the data drift using third performance data and the second performance data. More generally, by virtue of loop 550, the update module 500 is configured to receive nth performance data at an nth point in time, subsequent to the n-1th point in time, and store the nth performance data; and then to calculate the data drift using the nth performance data and the n-1th performance data. This enables continuous monitoring of the machine learning model 120.

If the data drift is above the first predetermined drift threshold, then update module 500 in step 560 triggers retaining of the machine learning model 120 to form retained machine learning model 120'. This is achieved by update module 500 by sending an instruction to machine learning model 120. Other processing modules of machine learning inference system 100 may be updated alongside machine learning model 120. In particular, the data minder module 300, data remapping module 400, sampling module 500, adversarial defence module 700 and data interpretability module 800 may all be updated alongside machine learning model 120. This is because these processing modules involve deep neural networks or deep machine learning algorithms, and improved performance is achieved by training all deep neural networks and deep machine learning algorithms together.

When updating machine learning model 120 and other processing modules of machine learning inference system 100, it is important to avoid catastrophic forgetting. Catastrophic forgetting refers to the loss of ability to cope with previously learned training data, whenever an attempt is made to train the network with new training data. To help avoid the catastrophic forgetting problem, the performance of the retained machine learning model 120' and other processing modules of machine learning inference system 100 is determined. The performance is determined by processing a validation dataset in the machine learning inference system 100 using the retained machine learning model 120', where a validation dataset is a particular set of sample data which is used as a benchmark for the machine learning inference system 100. The performance data from processing the validation dataset is then received by update module 500 which determines whether the retrained machine learning model 120' achieves an improved performance compared to the previous machine learning model 120. If an improved performance is achieved by retained machine learning model 120', then the machine learning model 120 is updated. However, if worse performance is achieved by retained machine learning model 120', then the machine learning model 120 is not updated.

There are other reasons why machine learning model 120 may need updating other than data drift. For example, more training data may become available over time, which is advantageous because machine learning model 120 when trained on a larger data set generalises better and therefore provides a higher level of performance. Thus, update module 500 is further configured to trigger retraining of the machine learning model periodically and/or to include additional training data. Additionally, update model is configured to trigger retraining of the machine learning model in response to a flag from the exception path 150. This flag may be prompted by a human operator in response to real world events. For instance, in the identity verification example, the ep human operator may flag for update when an updated version of an official document is released.

*Other Modules*

Machine learning inference system 100 of Fig. 7 includes further modules which can be used to maintain high performance for mission-critical applications. In particular, machine learning inference system 100 of Fig. 7 includes a sampling module 600 which is communicatively coupled to the decision point 130, to data minder module 300, and update module 500. Further, machine learning inference system 100 of Fig. 7 includes a data interpretability module 800 which is communicatively coupled to the machine learning model 120.

The purpose of sampling module 600 is to sample the output of the machine learning model 120 from decision point 130, and determine performance data of the sampled outputs to send to update module 500. In particular, the sampling of sampling module 600 should have a good coverage over the sample data received in the wild, and should be statistically large. These are achieved by sampling module 600 because sampling module 600 is configured to sample the machine learning model output based on the data representation model. The data representation model is the data representation model calculated by data minder module 300, and is thus received by sampling module 600 from data minder module 300.

In particular, sampling module 600 is configured to sample, based on the data representation model, the machine learning model output from decision point 130 at a first point in time. Using this sample, sampling module 600 determines first performance data for the machine learning model 120. This sampling is repeated n times based on the data representation model. In other words, sampling module 600 is configured to sample, based on the data representation model, the machine learning model output at an nth point in time, subsequent to the n-1th point in time and determine nth performance data for the machine learning model based on the sample. The sampling of sampling module 600 is based on the data representation model in that sampling module 600 includes samples from different classifications in the data representation model. For example, with reference to the data representation model in image B of Fig. 11A, the sampling module 600 ensures that samples are taken from across the training data (i.e. the "in-distribution data" of image B). Moreover, the sampling module 600 ensures that samples are taken from across the sample data that is not within the data representation model (i.e. the "out-of-distribution data" of image B).

The purpose of data interpretability module 800 is to provide interpretability and auditability of the machine learning model 120 for consumption by a human operator. This is important for mission-critical applications where the outcome of machine learning model 120 can have significant consequences. For instance, for a healthcare application that diagnoses diseases, data interpretability module 800 provides a way for a medical practitioner to see how the machine learning model 120 arrived at a particular diagnosis of a disease so that the medical practitioner can ensure that the diagnosis is based on expected indications of the disease, and not an artefact of the machine learning model 120.

Data interpretability module 800 generates a remapped image of the sample data which identifies the salient features of the sample data that were used by machine learning model 120 to arrive at the output. This remapped image, is sent to exception path 150 for consumption by a human operator, may also be referred to as a saliency map. In particular, a visual representation of the remapped image is rendered for consumption by a human operator. As with the sample activation signature, the saliency map is derived from sample log data of machine learning model 120 received by performing algorithmic computations on the machine learning model 120 during processing of the sample data. However, for data interpretability module 800, a second model interpretability algorithm is performed on the sample log data, which is different to the first model interpretability algorithm performed on the sample data in adversarial defence module 700. The second model interpretability algorithm identifies only a portion of the activations within the hidden layers of machine learning model 120 from processing the sample data, namely the salient activations. For example, in a machine learning model with 10,000 activations, the second model interpretability algorithm may only identify the 10 most salient activations, whereas the first model interpretability algorithm identifies all 10,000 of the activations. Based on the salient activations, the data interpretability module 800 forms the saliency map.

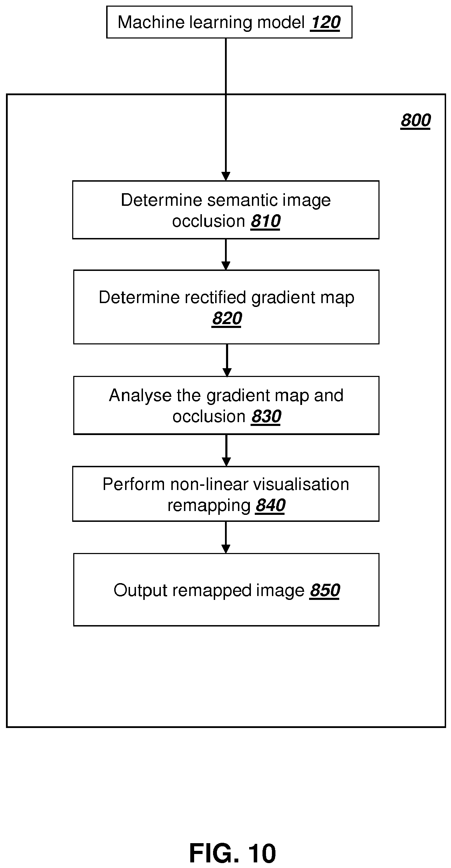

An example second model interpretability algorithm for data interpretability module 800 is shown in Fig. 10. In particular, at step 810, data interpretability module 800 determines semantic image occlusion of the sample data. Then, at step 820, data interpretability module 800 determines a rectified gradient map of the image of the sample data. In step 830, the semantic image occlusion and the rectified gradient map are analysed in order to determine the characteristics of the machine learning model 120 behaviour and thus identify the salient features of the sample data. For instance, features which are always present regardless of occlusion likely have a high semantic importance. In step 840, the remapping of the sample data is performed. In particular, non-linear visualisation remapping is performed to emphasise the salient features of the sample data. This remapped image is then output at step 850 for consumption by a human operator.

*Example*

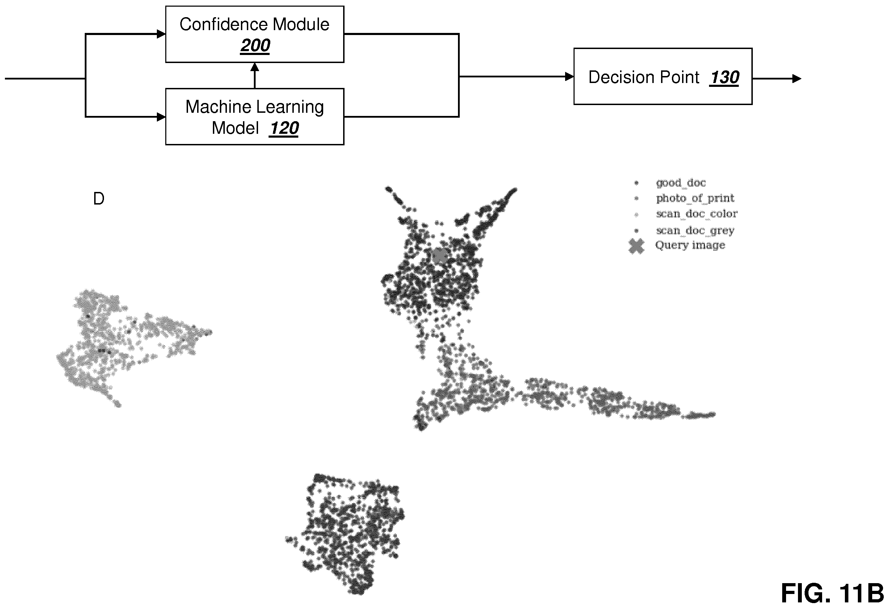

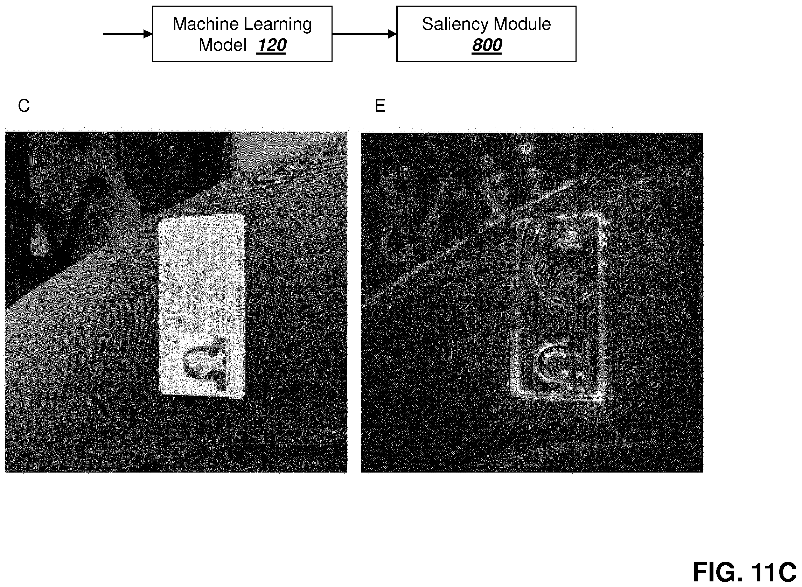

Fig. 11A, Fig. 11B and Fig. 11C show an example of the steps performed by machine learning inference system 100 with an image of an official document as the sample data. In particular, Fig. 11A, Fig. 11B and Fig 11C gives an example of how the various processing modules described herein work in combination to produce an accurate output for consumption by an identity verification application (i.e. a mission-critical application).

As shown in Fig. 11A, the machine learning inference system 100 receives a sample image A. Sample image A contains an official document but is a low quality image due to the poor lighting conditions in which the image was captured. Sample image A is sent to data minder module 300 where the similarity score is calculated according to the method described herein. The similarity score is found to be between the first predetermined similarity threshold and the second predetermined similarity threshold. In other words, sample image A is similar to the training data used to train machine learning model 120. Sample image A is plot in image B of Fig. 11A, which is a visualisation of the manifold of the machine learning model 120 created using UMAP (Uniform Manifold Approximation and Projection), as the darker shaded cross on the edge of the manifold. As the similarity score is between the first predetermined similarity threshold and the second predetermined similarity threshold, sample image A is sent to data remapping module 400 where domain adaptation is performed on sample image A to form adjusted sample image C. As can be seen from Fig. 11A, adjusted sample image C is much brighter than sample image A.

Turning to Fig. 11B, the adjusted sample image C is received at the confidence module 200, as well as the machine learning model 120. The machine learning model 120 processes the adjusted sample image C to produce an output, which in this example is a confirmation of whether an official document is present in the image. For adjusted sample image C in particular, the machine learning model 120 confirmed as its output that an official document is present in the image. This output is sent to the confidence module 200. Then, using the adjusted sample image C and the output of the machine learning model 120, the confidence module creates a confidence score for the output of the machine learning model 120. Image D in Fig. 11B provides a visual representation of the adjusted sample image C within the manifold of the machine learning model 120 that was produced using UMAP. The confidence score for adjusted sample image C was found to be 0.973 (i.e. 97.3% confidence that an official document is present in the image), which is above the predetermined confidence threshold. Consequently, the output of the machine learning model 120 is confirmed by confidence module 200 at decision point 130. The output of the machine learning model 120 is then sent on to be actioned by the identity verification application.

When the machine learning model 120 processes the adjusted sample image C, data interpretability module 800 analyses decisions that are made within machine learning model 120 in order to arrive at the output. The salient features of the sample data are emphasised by the data interpretability module 800 to form a remapped image of the sample data, and this remapped image is output for consumption by a human operator. Image E of Fig. 11C shows the remapped image E for adjusted sample image C. As can be seen from remapped image E, the output of the machine learning model 120 is based on the outer perimeter of the official document, as well as the main features of the official document, including particular document patterns and a human face. These features coincide with those features which a human operator would use to determine whether an official document is present. Therefore, the output of the machine learning model 120 is interpretable and auditable.

*Implementation*

The tangible implementation of the invention depends on the nature of the application which utilises the machine learning inference system or the processing modules thereof. In particular, since the range of mission-critical applications is vast, so too are the ways in which the invention can be implemented. The invention can take the form of an entirely hardware embodiment, an entirely software embodiment, or an embodiment containing both hardware and software elements. Hardware elements may be physical hardware elements or virtual hardware elements.

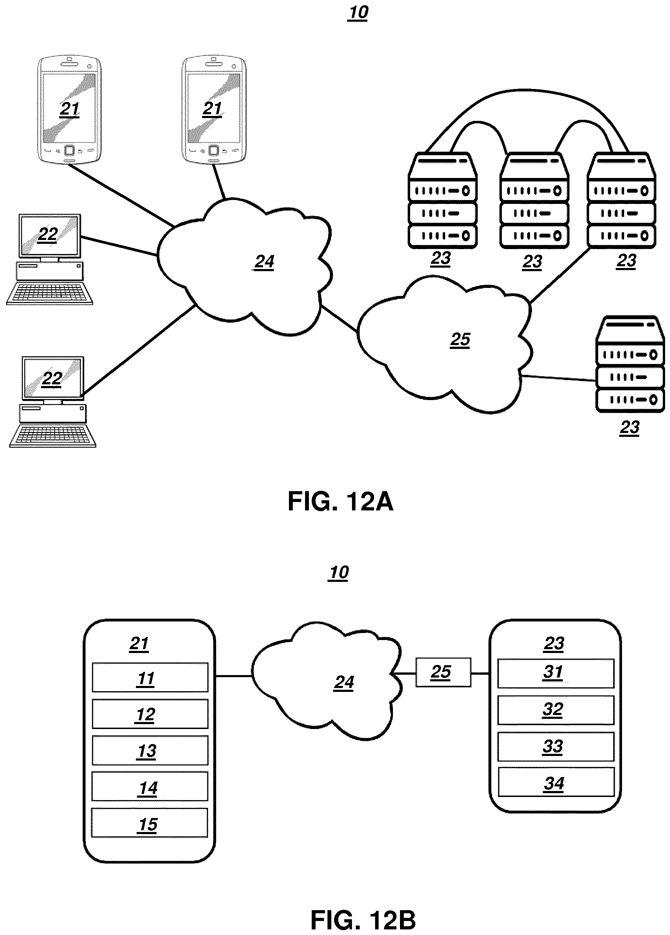

Fig. 12A and Fig. 12B show an example hardware implementation of the invention. In particular, Fig. 12A shows a system 10 in which, according to one embodiment, one or more of the disclosed methods, processing modules, or machine learning inference system 100 is implemented. System 10 comprises user electronic devices, including mobile electronic device 21 and fixed location electronic device 22, and remote servers 23. The user electronic devices are in communication with at least one communication network 24, 25. Data may be communicated between the user electronic devices via the at least one communication network 24, 25. The at least one communication network 24, 25 may include the internet, an internet of things (IoT) network, a cellular network, a cloud network, or the like. The at least one communication network 24, 25 may be a wireless network, for example, a 3G network, a 4G LTE network, a 5G network, or WiFi communication network, or any other conventionally known wireless communication network. The described network architecture is only exemplary and modifications to it, including removing or adding of network components, are possible.

Fig. 12B shows selected aspects of the network system 10 shown in Fig. 12A. Specifically, Fig. 12B shows a mobile electronic device 21 in communication, over the wireless network 24, and the internet 25, with a remote server 23. The server 23 is an electronic device that can be accessed across the network 24 by user electronic devices 21, 22 to perform computational tasks (also referred to as "computer processing"). The mobile electronic device 21 comprises a communication subsystem 11 to enable communication across the wireless network 24. The mobile electronic device 21 further comprises at least one application 12 that can be executed on a processor 13. Application 12 may or may not comprise a mission-critical application. The mobile electronic device 21 further comprises a camera 15 that can be used to acquire sample data. The sample data and at least one application 12 are stored in memory 14 on the mobile electronic device 21. Sample data stored in memory 14 may be processed by a machine learning model using the processor 13 of the mobile electronic device.

Fig. 12B also shows a remote server 23 which is connected to the wireless network 24 via the internet 25 using a network interface 31. The server 23 further comprises one or more applications 32 that can be executed on a processor 33 on the server 23. Application 32 may comprise a mission-critical application. The server further comprises memory 34 on which the applications 32 and any data that is received from the wireless network 24, and any electronic device connected thereto, can be stored. Sample data stored in memory 34 may be processed by a machine learning model using the processor 33 of the server 23. Alternatively, sample data received from mobile electronic device 21 may be processed by a machine learning model using the processor 33 of the server 23. In some instances, processor 33 of the server is also used to train the machine learning model using training data. The server 23 may be distributed and comprise multiple servers, several processors and/or several memory storage locations. Such a distributed server 23 may operate by distributing computational tasks and data across its constitute parts and may communicate with other servers to perform computational operations.

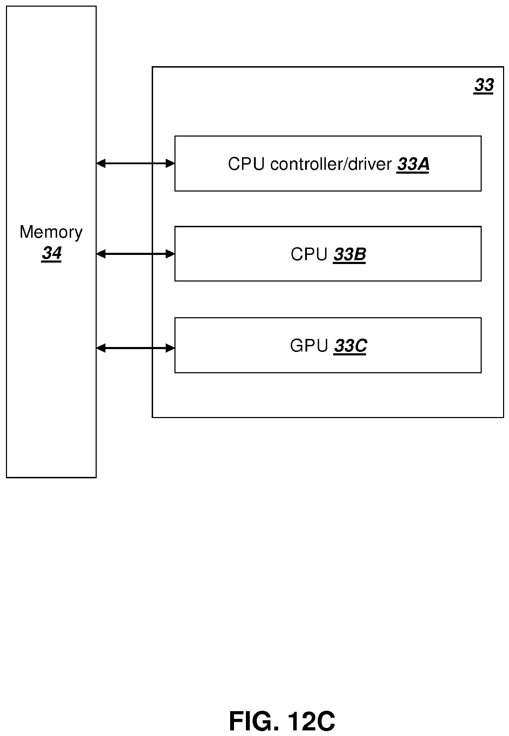

As shown in Fig. 12C, processor 33 of remote server 23 comprises one or more of: CPU (central processing unit) controller 33A or CPU driver 33A; CPU 33B; and GPU 33C (graphical processing unit). CPU controller/driver 33A orchestrates the disclosed methods, processing modules, or machine learning inference system 100 as a whole. CPU 33B is used for standard processing tasks including mathematical operations and machine learning algorithms which are not deep machine learning algorithms. GPU 33C is used for deep neural networks and deep learning, where the increased computational speed is useful. Each of the CPU controller/driver 33A, the CPU 33B, and the GPU 33C are communicatively coupled to memory 34, which is a shared memory. Memory 34 receives sample data for processing in pre-processing module 110, and also receives actions to be implemented in application 32 or application 12 from action module 140.

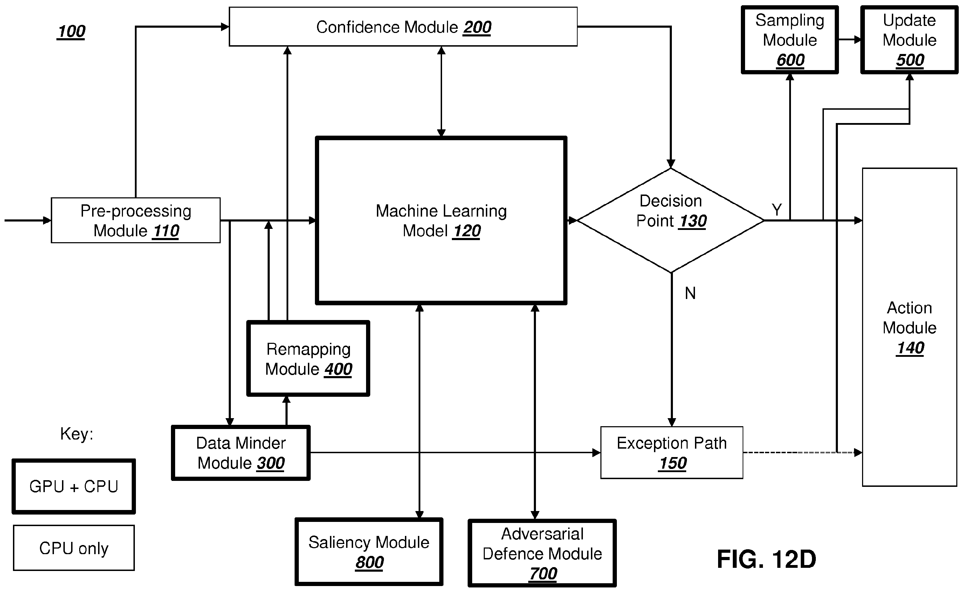

Fig. 12D shows an example distribution of processing tasks across CPU 33B and GPU 33C. As can be seen from Fig. 12D, pre-processing module 110, confidence module 200, decision point 130, action module 140 and exception path 150 use only CPU 33B and do not use GPU 33C. This is because none of these modules involve deep learning or a deep neural network. On the other hand, machine learning model 120, data minder module 300, data remapping module 400, update module 500, sampling module 600, adversarial defence module 700 and logging module 800 use both GPU 33C and CPU 33B.

The person skilled in the art should appreciate that other hardware implementations are also possible, and that the invention should not be limited to the particular implementation described above. For example, hardware elements may be physical hardware elements or virtual hardware elements, such that server 23 is a virtual server, which is hosted on in a cloud environment.

When implemented in software, the invention can take the form of a computer program embodied as a computer-readable medium having computer executable code for use by or in connection with a computer. For the purposes of this description, a computer readable medium is any tangible apparatus that can contain, store, communicate, propagate, or transport the program for use by or in connection with the computer. Moreover, a computer-readable medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk-read only memory (CD-ROM), compact disk-read/write (CD-R/W) and DVD.

Moreover, the flow diagrams in the figures illustrate the architecture, functionality, and operation of possible implementations of methods according to various embodiments of the present invention. In this regard, each block in the diagrams of the machine learning inference system, namely Fig. 2 and Fig. 7, may represent a processing module, i.e. a segment or portion of code, which comprises one or more executable instructions for implementing the specified logical function(s).

It should also be noted that, in some alternative implementations, the functions noted in the block may occur out of the order noted in the figures. For example, two blocks shown in succession may, in fact, be performed substantially concurrently, or the blocks may sometimes be performed in the reverse order, depending upon the functionality involved. It will also be noted that each block of the flow diagrams, and combinations of blocks in the flow diagrams, can be implemented by special purpose hardware-based systems that perform the specified functions or acts, or combinations of special purpose hardware and computer instructions.

*General*

As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that the above description of is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of this invention.

*Embodiments*

The following list provides embodiments of the invention and forms part of the description. These embodiments can be combined in any compatible combination beyond those expressly stated. The embodiments can also be combined with any compatible features described herein:

1. A machine learning inference system comprising:

a machine learning model configured to receive sample data, process the sample data, and produce an output; and
a confidence module communicatively coupled to the machine learning model and configured to perform the following steps:

receiving data pertaining to the sample data;
analysing the data pertaining to the sample data using a mathematical operation and/or a machine learning algorithm, wherein the machine learning algorithm is not a deep machine learning algorithm;
determining a confidence score for the machine learning model based on the analysis; and
only if the confidence score is below a predetermined confidence threshold, triggering retraining of the machine learning model.

2. The machine learning inference system of embodiment 1, wherein the machine learning algorithm comprises a random decision forest or a regression algorithm.

3. The machine learning inference system of embodiment 1 or 2, wherein the mathematical operation comprises a distribution based on a Softmax score, the Softmax score calculated by applying a Softmax operator to the output of the machine learning model.

4. The machine learning inference system of any preceding embodiment, wherein the mathematical operation comprises a Kullback-Leibler divergence.

5. The machine learning inference system of any preceding embodiment, wherein the data pertaining to the sample data comprises the sample data.

6. The machine learning inference system of any preceding embodiment, wherein the data pertaining to the sample data comprises metadata of the sample data.

7. The machine learning inference system of any preceding embodiment, wherein the data pertaining to the sample data comprises the output of the machine learning model from processing the sample data.

8. The machine learning inference system of any preceding embodiment, wherein the data pertaining to the sample data comprises adapted sample data.

9. The machine learning inference system of embodiment 8, further comprising a data remapping module communicatively coupled to the confidence module and configured to send the adapted sample data to the confidence module.

10. The machine learning inference system of any preceding embodiment, wherein the data pertaining to the sample data comprises a Softmax score, the Softmax score calculated by applying a Softmax operator to the output of the machine learning model.

11. The machine learning inference system of embodiment 10, wherein analysing the data pertaining to the sample data comprises creating a distribution using the Softmax score.

12. The machine learning inference system of embodiment 11, wherein creating the distribution using the Softmax score comprises:

introducing random occlusion to the sample data or cutting random connections in the machine learning model; reprocessing the sample data using the machine learning model and determining an adjusted Softmax score; repeating the introducing or cutting, and reprocessing K times to determine K adjusted Softmax scores.

13. The machine learning inference system of embodiment 12, wherein creating the distribution using the Softmax score comprises: for each of the K adjusted Softmax scores, calculating the modulus of (0.5 - adjusted Softmax score).

14. The machine learning inference system of any of embodiments 11 to 13, wherein analysing the data pertaining to the sample data further comprises calculating the divergence between the distribution and a uniform distribution.

15. The machine learning inference system of embodiment 14, wherein the divergence is a Kullback-Leibler divergence.

16. The machine learning inference system of embodiment 14 or 15, wherein the divergence is an unscaled version of the confidence score.

17. The machine learning inference system any of embodiments 14 to 16, wherein analysing the data pertaining to the sample data further comprises using a logistic regression algorithm to scale the divergence.

18. The machine learning inference system of embodiment 17, wherein the scaled divergence is a scaled version of the confidence score.

19. The machine learning inference system any preceding embodiment, wherein the predetermined confidence threshold is specific to the application of the machine learning model.

20. The machine learning inference system of any preceding embodiment, further comprising an update module communicatively coupled to the confidence module, wherein triggering retraining of the machine learning model comprises sending a message to the update module.

21. The machine learning inference system of embodiment 20, further comprising an exception path communicatively coupled to the confidence module, wherein triggering retaining of the machine learning model further comprises sending the sample data to the exception path.

22. The machine learning inference system of any preceding embodiment, further comprising a decision point communicatively coupled to the confidence module, wherein the confidence module is further configured to: if the confidence score is above the predetermined confidence threshold, sending the output of the machine learning model to the decision point.

23. The machine learning inference system of any preceding embodiment, wherein the confidence module is further configured to: repeat the steps of receiving, analysing and determining for subsequent sample data processed by the machine learning model.

24. The machine learning inference system of embodiment 23, wherein the repeating is performed periodically.

25. The machine learning inference system of embodiment 24, wherein the repeating is performed for each subsequent sample data processed by the machine learning model.

26. The machine learning inference system of any preceding embodiment, further comprising:
a data minder module communicatively coupled to the machine learning model and configured to perform the following steps:

receiving training data, wherein the training data is the data used to train the machine learning model;

receiving the sample data prior to the machine learning model;

comparing, using a data representation model, the sample data to the training data to determine a similarity score;

only if the similarity score is above or equal to a first predetermined similarity threshold, sending the sample data to the machine learning model for processing.

27. The machine learning inference system of embodiment 26, further comprising a data remapping module communicatively coupled to the data minder module, wherein the data minder module is further configured to: if the similarity score is below the first predetermined similarity threshold but above or equal to a second predetermined similarity threshold, sending the sample data to the data remapping module.

28. The machine learning inference system of embodiment 26 or 27, wherein the data minder module is further configured to: if the similarity score is below a second predetermined similarity threshold, not sending the sample data to the machine learning model for processing.

29. The machine learning inference system of embodiment 28, further comprising an exception path communicatively coupled to the data minder module, wherein the data minder module is configured to: if the similarity score is below the second predetermined similarity threshold, sending the sample data to the exception path.

30. The machine learning inference system of any of embodiments 26 to 29, wherein using the data representation model comprises determining the structure of the training data and the structure of the domain of the training data.

31. The machine learning inference system of embodiment 30, wherein using the data representation model comprises: processing sample data using a target classifier to determine logit activations; processing sample data using a detector to determine reconstruction errors; processing the logit activations and reconstruction errors using an introspection net to determine an unscaled version of the similarity score.

32. The machine learning inference system of embodiment 31, wherein the target classifier is a deep convolutional neural network trained on the training data.

33. The machine learning inference system of embodiment 31 or 32, wherein the detector is an autoencoder trained on the training data.

34. The machine learning inference system of any of embodiments 31 to 33, wherein the introspection net is a neural network having three linear layers.

35. The machine learning inference system of any of embodiments 31 to 34, further comprising scaling the unscaled version of the similarity score using a mathematical operation to form a scaled version of the similarity score.

36. The machine learning inference system of any of embodiment 35, wherein the first predetermined similarity threshold is 0.95 and the second predetermined similarity threshold is between 0.5 and 0.95.

37. The machine learning inference system of any preceding embodiment, further comprising:
a data remapping module communicatively coupled to the machine learning model and configured to perform the following steps:

receiving training data, wherein the training data is the data used to train the machine learning model;

receiving the sample data prior to the machine learning model;

performing domain adaptation on the sample data to increase the similarity between the sample data and the training data;

sending the adapted sample data to the machine learning model for processing.

38. The machine learning inference system of embodiment 37, further comprising a data minder module, the data remapping module communicatively coupled to the data minder module, wherein the sample data is received from the data minder module.

39. The machine learning inference system of embodiment 37 or 38, wherein domain adaptation comprises performing deep domain adaptation.

40. The machine learning inference system of embodiment 39, wherein deep domain adaptation comprises using a deep adversarial network.

41. The machine learning inference system of any of embodiments 37 to 40, wherein domain adaptation comprises using one or more of histograms, colour bands, and contrast equalisation.

42. The machine learning inference system of embodiment 41, wherein domain adaptation comprises a histogram correction procedure.

43. The machine learning inference system of any of embodiments 37 to 42, wherein domain adaptation comprises using an iterative deconvolution procedure.

44. The machine learning inference system of any of embodiments 37 to 43, the data remapping module further configured to send the adapted sample data to the confidence module.

45. The machine learning inference system of any preceding embodiment, further comprising:
an adversarial defence module communicatively coupled to the machine learning model and configured to perform the following steps:

creating a reference activation signature for the machine learning model at a first point in time;
creating a sample activation signature for the machine learning model at a second point in time, subsequent to the first point in time;
comparing the sample activation signature to the reference activation signature to detect an anomaly in the sample activation signature; and
if an anomaly is detected, sending the sample data to an exception path.

46. The machine learning inference system of embodiment 45, wherein the first point in time is after the machine learning model has been trained and before the machine learning model processes the sample data.

47. The machine learning inference system of any of embodiments 45 to 46, wherein the reference activation signature represents all activations within hidden layers of the machine learning model from processing the training data.

48. The machine learning inference system of any of embodiments 45 to 47, wherein the second point in time is after the machine learning model has processed the sample data.

49. The machine learning inference system of any of embodiments 45 to 48, wherein the sample activation signature represents all activations within hidden layers of the machine learning model from processing the sample data.

50. The machine learning inference system of any of embodiments 45 to 49, wherein the adversarial defence module is further configured to create sample log data from the machine learning model during processing of the sample data.

51. The machine learning inference system of embodiment 50, wherein the adversarial defence module is configured to create the sample log data by performing algorithmic computations on the machine learning model during processing of the sample data.

52. The machine learning inference system of any of embodiments 50 or 51, wherein the adversarial defence module is configured to perform a first model interpretability algorithm on the sample log data to form the sample activation signature.

53. The machine learning inference system of any of embodiments 45 to 52, wherein the adversarial defence module is further configured to create reference log data from the machine learning model during processing of the training data.

54. The machine learning inference system of embodiment 53, wherein the adversarial defence module is configured to create the reference log data by performing algorithmic computations on the machine learning model during processing of the training data.

55. The machine learning inference system of any of embodiments 53 or 54, wherein the adversarial defence module is configured to perform a first model interpretability algorithm on the reference log data to form the reference activation signature.

56. The machine learning inference system of embodiment 55, wherein the training data comprises a plurality of individual training items, and the reference activation signature is an average of the reference activation signatures of each of the plurality of individual training items.

57. The machine learning inference system of any of embodiments 45 to 56, wherein an anomaly in the sample activation signature indicates that an adversarial attack has occurred.

58. The machine learning inference system of embodiment 57, wherein the adversarial defence module is further configured to cause an alert to indicate that an adversarial attack has occurred if an anomaly is detected.

59. The machine learning inference system of embodiment 57 or 58, wherein the adversarial defence module is further configured to identify the sample data associated with the adversarial attack.

60. The machine learning inference system of embodiment 59, further comprising a detection module communicatively coupled to the machine learning model and configured to detect adversarial sample data based on the sample activation signature of the sample data associated with the adversarial attack.

61. The machine learning inference system of embodiment 60, wherein the detection module is communicatively coupled to the exception path and configured to send the adversarial sample data to the exception path.

62. The machine learning inference system of any preceding embodiment, further comprising:
an update module communicatively coupled to the machine learning model and configured to perform the following steps:

receiving first performance data relating to the performance of the machine learning model at a first point in time and storing the first performance data;
receiving second performance data relating to the performance of the machine learning model at a second point in time, subsequent to the first point in time, and storing the second performance data;
calculating a data drift for the machine learning model using the second performance data and the first performance data;
if the data drift is above a first predetermined drift threshold, triggering retraining of the machine learning model.

63. The machine learning inference system of embodiment 62, wherein the update module is further configured to perform the following steps: receiving third performance data relating to performance of the machine learning model at a third point in time, subsequent to the second point in time, and storing the third performance data; calculating a data drift for the machine learning model using the third performance data and the second performance data.

64. The machine learning inference system of embodiment 62 or 63, wherein the update module is further configured to perform the following steps: receiving nth performance data relating to performance of the machine learning model at an nth point in time, subsequent to the n-1th point in time, and storing the nth performance data; calculating a data drift for the machine learning model using the nth performance data and the n-1th performance data.

65. The machine learning inference system of any of embodiments 62 to 64, wherein the minimum time between the first point in time and the second point in time is the time taken by machine learning model to process the sample data.

66. The machine learning inference system of any of embodiments 62 to 64, wherein the between the first point in time and the second point is hours to days.

67. The machine learning inference system of any of embodiments 62 to 66, wherein the first performance data and the second performance data relate to the same performance metric, a first performance metric.

68. The machine learning inference system of embodiment 67, wherein the update module is further configured to perform the following steps: receiving first performance data and second performance data relating to a second performance metric, different from the first performance metric.

69. The machine learning inference system of any of embodiments 62 to 66, wherein the first performance data and the second performance data relate to a different performance metrics, a first performance metric and a second performance metric respectively.

70. The machine learning inference system of any of embodiments 62 to 66, wherein the first performance data and the second performance data relate to a combination of performance metrics.

71. The machine learning inference system of any of embodiments 62 to 70, wherein the update module is further configured to predict the performance of the retained machine learning model.

72. The machine learning inference system of embodiment 71, wherein predicting the performance of the retained machine learning model comprises predicting performance data of the retained machine learning model when processing a validation dataset.

73. The machine learning inference system of embodiment 72, wherein the predicted performance data of the retained machine learning model is compared against the validation performance data of the machine learning model when processing the validation dataset.

74. The machine learning inference system of embodiment 73, wherein the update module is further configured to revert the retained machine learning model back to the machine learning module if the predicted performance data of the retained machine learning module is lower than the validation performance data of machine learning module.

75. The machine learning inference system of any of embodiments 62 to 74, wherein the update module is further configured to perform the following steps: triggering retraining of the machine learning model periodically.

76. The machine learning inference system of any of embodiments 62 to 75, wherein the update model is further configured to perform the following steps: triggering retaining of the machine learning model to include additional training data.

77. The machine learning inference system of any of embodiments 62 to 76, further comprising an exception path communicatively coupled to the update module, wherein the update model is further configured to perform the following steps: triggering retraining of the machine learning model in response to a message from the exception path.

78. The machine learning inference system of any of embodiments 62 to 77, wherein triggering retraining of the machine learning model comprises triggering training of the update module.

79. The machine learning inference system of any of embodiments 62 to 78, further comprising a data minder module communicatively coupled to the update module, wherein triggering retraining of the machine learning model comprises triggering training of the data minder module.

80. The machine learning inference system of any of embodiments 62 to 79, further comprising a data remapping module communicatively coupled to the update module, wherein triggering retraining of the machine learning model comprises triggering training of the data remapping module.

81. The machine learning inference system of any of embodiments 62 to 80, further comprising an adversarial defence module communicatively coupled to the update module, wherein triggering retraining of the machine learning model comprises triggering training of the adversarial defence module.

82. The machine learning inference system of any of embodiments 62 to 81, further comprising a sampling module communicatively coupled to the update module, wherein triggering retraining of the machine learning model comprises triggering training of the sampling module.

83. The machine learning inference system of any of embodiments 62 to 82, further comprising a data interpretability module communicatively coupled to the update module, wherein triggering retraining of the machine learning model comprises triggering training of the data interpretability module.

84. The machine learning inference system of any preceding embodiment, further comprising:
a sampling module communicatively coupled to the machine learning model and configured to perform the following steps:

   sampling, based on a data representation model, the machine learning model output at a first point in time; and determining first performance data for the machine learning model.

85. The machine learning inference system of embodiment 84, wherein the sampling module is further configured to perform the following steps: sampling, based on the data representation model, the machine learning model output at a second point in time, subsequent to the first point in time; and determining second performance data for the machine learning model.

86. The machine learning inference system of embodiment 85, wherein the sampling module is further configured to perform the following steps: sampling, based on the data representation model, the machine learning model output at a nth point in time, subsequent to an n-1th point in time; and determining nth performance data for the machine learning model.

87. The machine learning inference system of any of embodiments 84 to 86, further comprising an update module communicatively coupled to the sampling module, the sampling module configured to send the first performance data to the update module.

88. The machine learning inference system of any preceding embodiment, further comprising a data interpretability module communicatively coupled to the machine learning model and configured to perform the following steps: generating a remapped image of the sample data that identifies salient features of the sample data used by the machine learning model to arrive at the output.

89. The machine learning inference system of embodiment 88, wherein the data interpretability module is further configured to render a visual representation of the remapped image.

90. The machine learning inference system of embodiment 89, further comprising an exception path communicatively coupled to the data interpretability module, the data interpretability module configured to send the visual representation of the remapped image to the exception path.

91. The machine learning inference system of any of embodiments 88 to 90, wherein the remapped image of the sample data is generated using sample log data.

92. The machine learning inference system of embodiment 91, wherein the data interpretability module is further configured to create the sample log data by performing algorithmic computations on the machine learning model during processing of the sample data.

93. The machine learning inference system of embodiment 92, wherein the data interpretability module is further configured to perform a second model interpretability algorithm on the sample log data to form the remapped image.

94. The machine learning inference system of embodiment 93, wherein the second model interpretability algorithm comprises: determining semantic image occlusion of the sample data; determining a rectified gradient map of the sample data; analysing the semantic image occlusion and the rectified gradient map to identified the salient features of the sample data; and performing non-linear visualisation remapping of the sample data based on the identified salient features.

95. The machine learning inference system of any preceding embodiment, wherein the machine learning model is a deep neural network.

96. The machine learning inference system of any preceding embodiment, wherein the sample data comprises images of official documents.

97. The machine learning inference system of any preceding embodiment, further comprising a graphical processing unit, wherein the graphical processing unit is configured to perform processing tasks for one or more of: the machine learning model, a data minder module, a data remapping module, an adversarial defence module, and an update module.

98. The machine learning inference system of any preceding embodiment, further comprising a central processing unit, wherein the central processing unit is configured to perform processing tasks for one or more of: the confidence module, a pre-processing module, and a decision point.

99. The machine learning inference system of embodiment 98, wherein the central processing unit is further configured perform processing tasks for one or more of: the machine learning model, a data minder module, a data remapping module, an adversarial defence module, and an update module.

100. A computer-implemented method for a confidence module of a machine learning inference system, the method comprising:

receiving data pertaining to sample data, wherein the sample data is data to be processed by a machine learning model;
analysing the data pertaining to the sample data using a mathematical operation and/or a machine learning algorithm, wherein the machine learning algorithm is not a deep machine learning algorithm;
determining a confidence score for the machine learning model based on the analysis; and
only if the confidence score is below a predetermined confidence threshold, triggering retraining of the machine learning model.

101. A computer-implemented method for a data minder module of a machine learning inference system, the method comprising:

receiving training data, wherein the training data is the data used to train a machine learning model;
receiving the sample data prior to the machine learning model, wherein the sample data is data to be processed by the machine learning model;
comparing, using a data representation model, the sample data to the training data to determine a similarity score;
only if the similarity score is above a first predetermined similarity threshold, sending the sample data to the machine learning model for processing.

102. A computer-implemented method for a data remapping module of a machine learning inference system, the method comprising:

receiving training data, wherein the training data is the data used to train a machine learning model;
receiving the sample data prior to the machine learning model, wherein the sample data is data to be processed by the machine learning model;
performing domain adaptation on the sample data to increase the similarity between the sample data and the training data;
sending the adapted sample data to the machine learning model for processing.

103. A computer-implemented method for an adversarial defence module of a machine learning inference system, the method comprising:

creating a reference activation signature for a machine learning model at a first point in time;
creating a sample activation signature for the machine learning model at a second point in time, subsequent to the first point in time;
comparing the sample activation signature to the reference activation signature to detect an anomaly in the sample activation signature; and
if an anomaly is detected, sending the sample data to an exception path.

104. A computer-implemented method for an update module of a machine learning inference system, the method comprising:

receiving first performance data relating to the performance of a machine learning model at a first point in time and storing the first performance data;
receiving second performance data relating to the performance of the machine learning model at a second point in time, subsequent to the first point in time, and storing the second performance data;

calculating a data drift for the machine learning model using the second performance data and the first performance data;

if the data drift is above a first predetermined drift threshold, triggering retraining of the machine learning model.

105. A processing module for a machine learning inference system configured to perform the method of any one of embodiments 100 to 104

106. A computer-readable storage medium comprising executable instructions for performing the method of any one of embodiments 100 to 104.

107. A processor configured to execute executable code stored in memory, wherein the executable code comprises instructions for performing the method of any of embodiments 100 to 104.

**Claims**

1. A machine learning inference system comprising:

   a machine learning model configured to receive sample data, process the sample data, and produce an output; and
   a confidence module communicatively coupled to the machine learning model and configured to perform the following steps:

      receiving data pertaining to the sample data;
      analysing the data pertaining to the sample data using a mathematical operation and/or a machine learning algorithm, wherein the machine learning algorithm is not a deep machine learning algorithm;
      determining a confidence score for the machine learning model based on the analysis; and
      only if the confidence score is below a predetermined confidence threshold, triggering retraining of the machine learning model.

2. The machine learning inference system of any preceding claim, wherein the data pertaining to the sample data comprises one or more of: the sample data, metadata of the sample data, the output of the machine learning model from processing the sample data, adapted sample data, a Softmax score, the Softmax score calculated by applying a Softmax operator to the output of the machine learning model.

3. The machine learning inference system of claim 2, wherein analysing the data pertaining to the sample data comprises creating a distribution using the Softmax score and calculating the divergence between the distribution and a uniform distribution, wherein the divergence is an unscaled version of the confidence score.

4. The machine learning inference system of any preceding claim, further comprising:
   a data minder module communicatively coupled to the machine learning model and configured to perform the following steps:

      receiving training data, wherein the training data is the data used to train the machine learning model;
      receiving the sample data prior to the machine learning model;
      comparing, using a data representation model, the sample data to the training data to determine a similarity score;
      only if the similarity score is above or equal to a first predetermined similarity threshold, sending the sample data to the machine learning model for processing.

5. The machine learning inference system of claim 4, further comprising a data remapping module communicatively coupled to the data minder module, wherein the data minder module is further configured to:
   if the similarity score is below the first predetermined similarity threshold but above or equal to a second predetermined similarity threshold, sending the sample data to the data remapping module.

6. The machine learning inference system of claim 4 or 5, wherein the data minder module is further configured to:
   if the similarity score is below a second predetermined similarity threshold, not sending the sample data to the machine learning model for processing.

**7.** The machine learning inference system of any preceding claim, further comprising:
a data remapping module communicatively coupled to the machine learning model and configured to perform the following steps:

receiving training data, wherein the training data is the data used to train the machine learning model;
receiving the sample data prior to the machine learning model;
performing domain adaptation on the sample data to increase the similarity between the sample data and the training data;
sending the adapted sample data to the machine learning model for processing.

**8.** The machine learning inference system of claim 7, further comprising a data minder module, the data remapping module communicatively coupled to the data minder module, wherein the sample data is received from the data minder module.

**9.** The machine learning inference system of any preceding claim, further comprising:
an adversarial defence module communicatively coupled to the machine learning model and configured to perform the following steps:

creating a reference activation signature for the machine learning model at a first point in time;
creating a sample activation signature for the machine learning model at a second point in time, subsequent to the first point in time;
comparing the sample activation signature to the reference activation signature to detect an anomaly in the sample activation signature; and
if an anomaly is detected, sending the sample data to an exception path.

**10.** The machine learning inference system of any preceding claim, further comprising:
an update module communicatively coupled to the machine learning model and configured to perform the following steps:

receiving first performance data relating to the performance of the machine learning model at a first point in time and storing the first performance data;
receiving second performance data relating to the performance of the machine learning model at a second point in time, subsequent to the first point in time, and storing the second performance data;
calculating a data drift for the machine learning model using the second performance data and the first performance data;
if the data drift is above a first predetermined drift threshold, triggering retraining of the machine learning model.

**11.** The machine learning inference system of claim 10, wherein the update module is further configured to predict performance data of the retained machine learning model by processing a validation dataset, and compare the predicted performance data against validation performance data of the machine learning model when processing the validation dataset.

**12.** The machine learning inference system of claim 11, wherein the update module is further configured to revert the retained machine learning model back to the machine learning module if the predicted performance data of the retained machine learning module is lower than the validation performance data of machine learning module.

**13.** The machine learning inference system of any preceding claim, further comprising:
a sampling module communicatively coupled to the machine learning model and configured to perform the following steps:

sampling, based on a data representation model, the machine learning model output at a first point in time; and
determining first performance data for the machine learning model.

**14.** The machine learning inference system of any preceding claim, further comprising:
a data interpretability module communicatively coupled to the machine learning model and configured to perform the following steps:
generating a remapped image of the sample data that identifies salient features of the sample data used by the machine learning model to arrive at the output.

15. The machine learning inference system of any preceding claim, further comprising a graphical processing unit, wherein the graphical processing unit is configured to perform processing tasks for one or more of: the machine learning model, a data minder module, a data remapping module, an adversarial defence module, and an update module.

EP 3 812 974 A1

_100P_

```
┌──────────────┐        ┌──────────────┐      ╱ Decision ╲    Y    ┌──────────┐
→│ Pre-processing│  ───→ │Machine Learning│ ──→│   Point    │ ─────→ │  Action  │
 │ Module 110P  │        │  Model 120P   │      ╲  130P   ╱          │  Module  │
 └──────────────┘        └──────────────┘         ╲   ╱             │   140P   │
                                                     │ N             └──────────┘
                                                     ↓                    ↑
                                              ┌──────────────┐            ┊
                                              │Exception Path │┄┄┄┄┄┄┄┄┄┄┄┘
                                              │     150P      │
                                              └──────────────┘
```

**FIG. 1** (prior art)

**FIG. 2**

*200*

| Pre-processing Module *110* |
|---|

Receive data pertaining to sample data *210*

Analysing the data pertaining to sample data *220*

Determine confidence score *230*

Confidence score < threshold *240*

N

Y

Trigger retraining of machine learning model *250*

Decision point *130*

## FIG. 3A

210

220

| Repeat 224 |

Introduce occlusion to sample data with probability P **221**

Cut connections in machine learning model having probability of 1-P **222**

Determine adjusted Softmax score **223**

Creating distribution using Softmax score **225**

Compute divergence between distribution and normal distribution **226**

Apply logistic regression scalar **227**

230

**FIG. 3B**

FIG. 3C

FIG. 4

**FIG. 5**

*330*

Target Classifier *331*

Detector *332*

Introspection net *333*

Scale similarity score *334*

**400**

Receiving training data **410**

Receiving sample data **420**

Performing domain adaptation on the sample data **430**

B

B'

Machine Learning Model
**120**

# FIG. 6

FIG. 7

**_700_**

| 120 | → | Creating a first activation signature for a first version of the machine learning model **_710_** |

Creating a second activation signature for a second version of the machine learning model **_720_**

| 120 | →

Comparing the first and second activation signatures **_730_**

Anomaly detected? **_740_**

Y

Revert machine learning model to the first version **_750_**

# FIG. 8

```
                                                              500

  600  ──→  Receive first performance data 510  ←──────┐
                         │                               │
                         ▼                               │
  600  ──→  Receive second performance data             │
            subsequent to first 520                      │
                         │                               │
                         ▼                        ┌──────┤
            Calculate the data drift 530          │  550 │
                         │                        │      │
                         ▼                        │      │
              ╱ Data drift >  ╲        N          │      │
             ⟨  threshold 540  ⟩ ─────────────────┘
              ╲               ╱
                    │ Y
                    ▼
            Trigger retraining of machine
            learning model 560
```

## FIG. 9

Machine learning model *120*

*800*

Determine semantic image occlusion *810*

↓

Determine rectified gradient map *820*

↓

Analyse the gradient map and occlusion *830*

↓

Perform non-linear visualisation remapping *840*

↓

Output remapped image *850*

# FIG. 10

FIG. 11A

FIG. 11B

```
┌─────────────────────┐        ┌─────────────────────┐
│  Machine Learning   │        │   Saliency Module   │
│   Model  120        │───────▶│       800           │
└─────────────────────┘        └─────────────────────┘
```

C

E

**FIG. 11C**

_10_

## FIG. 12A

_10_

## FIG. 12B

**FIG. 12C**

Update Module **500**

Sampling Module **600**

Action Module **140**

Confidence Module **200**

Decision Point **130**

Y

N

Machine Learning Model **120**

Exception Path **150**

Adversarial Defence Module **700**

Saliency Module **800**

Remapping Module **400**

Data Minder Module **300**

Pre-processing Module **110**

**100**

Key:

GPU + CPU

CPU only

**FIG. 12D**

Europäisches
Patentamt

European
Patent Office

Office européen
des brevets

# EUROPEAN SEARCH REPORT

Application Number

EP 19 20 5447

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/236458 A1 (TAYLOR MATTHEW EDMUND [CA] ET AL) 1 August 2019 (2019-08-01) * paragraph [0010] - paragraph [0034] * * paragraph [0083] - paragraph [0140] * * figures 1a-1d * | 1-15 | INV. G06N20/10 G06N3/04 G06N3/08 |
| X | US 2019/130305 A1 (SIVERTSON MATTHEW L [US]) 2 May 2019 (2019-05-02) * paragraph [0088] - paragraph [0233] * * figures 1a-5e * | 1-15 | |
| A | BHAVANI THURAISINGHAM ET AL: "MagNet : A Two-Pronged Defense against Adversarial Examples", PROCEEDINGS OF THE 2017 ACM SIGSAC CONFERENCE ON COMPUTER AND COMMUNICATIONS SECURITY , CCS '17, 30 October 2017 (2017-10-30), pages 135-147, XP055690792, New York, New York, USA DOI: 10.1145/3133956.3134057 ISBN: 978-1-4503-4946-8 * the whole document * | 9 | |
| A | EP 3 422 262 A1 (ROYAL HOLLOWAY AND BEDFORD NEW COLLEGE [GB]) 2 January 2019 (2019-01-02) * paragraph [0043] - paragraph [0052] * | 10 | TECHNICAL FIELDS SEARCHED (IPC) G06N |

The present search report has been drawn up for all claims

| Place of search | Date of completion of the search | Examiner |
|---|---|---|
| The Hague | 30 April 2020 | Baldan, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 20 5447

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2020

| Patent document cited in search report | | Publication date | Patent family member(s) | | Publication date |
|---|---|---|---|---|---|
| US 2019236458 | A1 | 01-08-2019 | CA | 3032159 A1 | 31-07-2019 |
| | | | US | 2019236458 A1 | 01-08-2019 |
| US 2019130305 | A1 | 02-05-2019 | US | 2019130305 A1 | 02-05-2019 |
| | | | WO | 2019083670 A1 | 02-05-2019 |
| EP 3422262 | A1 | 02-01-2019 | EP | 3422262 A1 | 02-01-2019 |
| | | | WO | 2019002603 A1 | 03-01-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SZEGEDY, C. ; ZAREMBA, W. ; SUTSKEVER, I. ; BRUNA, J. ; ERHAN, D. ; GOODFELLOW, I. ; FERGUS, R.** *Intriguing properties of neural networks,* 2013

- Magnet: a two-pronged defense against adversarial examples. **MENG, D. ; CHEN, H.** In Proceedings of the 2017 ACM SIGSAC Conference on Computer and Communications Security. ACM, 2017, 135-147
- Domain adaptation in computer vision applications. Springer, 2017, 1-35